# FASCICULE DE BREVET EUROPEEN

(11) **EP 2 269 359 B1**
(45) Date de publication et mention de la délivrance du brevet: **12.09.2018**
(21) Numéro de dépôt: 09735704.0
(22) Date de dépôt: 21.04.2009
(51) Int. Cl.: G06F 21/46, G06F 21/62, G06Q 10/10, H04L 12/58, H04L 9/32, H04L 29/06

(54) **PROCÉDÉ ET SYSTÈME DE SÉCURISATION DE TRANSFERTS DE DONNÉES**
VERFAHREN UND SYSTEME FÜR SICHERE DATENÜBERTRAGUNGEN
METHOD AND SYSTEM FOR SECURING DATA TRANSFERS

(30) Priorité: 22.04.2008 FR 0802239
(43) Date de publication de la demande: 05.01.2011
(73) Titulaire: Trustcorp S.A., 4220 Esch-sur-Alzette (LU)
(72) Inventeur: BLOT-LEFEVRE, Eric, F-92200 Neuilly Sur Seine (FR)
(74) Mandataire: Nguyen-Van-Yen, Christian
(86) Numéro de dépôt international: PCT/EP2009/054688
(87) Numéro de publication internationale: WO 2009/130190

(56) Documents cités:
- FR-A- 2 900 010
- FR-A- 2 900 011
- MENEZES ET AL: "Handbook of Applied Cryptography", , 1 January 1997 (1997-01-01), XP055098332, USA Retrieved from the Internet: URL:http://cacr.uwaterloo.ca/hac/ [retrieved on 2014-01-31]

## Description

La présente invention concerne un procédé et un système de sécurisation de transferts de données. Elle s'applique, en particulier, à la transmission de courriers, factures, documents juridiques ou comptables.

On connaît des procédés hybrides, électroniques et postaux, qui comportent une étape d'envoi d'un courrier électronique avec fourniture d'une adresse postale du destinataire, l'organisme postal imprimant ce courrier et acheminant sa version imprimée par des moyens postaux traditionnels, avec remise en main propre et signature, par le destinataire, d'un avis de réception.

On connaît aussi des procédés de transmission de courriers électroniques dits sécurisés, mettant en oeuvre, tant au niveau de l'émetteur qu'au niveau du destinataire, une signature électronique, par exemple une signature électronique conforme à l'infrastructure à clés publiques PKI (acronyme de « Public Key Infrastructure »).

Ces procédés et dispositifs ne permettent pas d'évaluer la qualité de
- la valeur probante de l'identité des correspondants ;
- la valeur probante de la signature juridique,
- la valeur probante du contenu avec les mentions obligatoires,
- la valeur probante de l'archivage fidèle et durable,
- la valeur probante de l'intégrité et de la réception des transmissions,
- la valeur probante de la lecture automatique par ordinateur,
- la garantie de sécurité des attributs de confiance personnels,
- la garantie de confidentialité / du secret des objets de correspondance et/ou
- la garantie d'interopérabilité entre les prestataires : composition/archivage/transfert.

On connaît aussi le document FR 06 04107 qui décrit un procédé de sécurisation de transfert de données qui met en oeuvre une évaluation de valeur d'au moins un attribut de transmission d'un document en fonction d'au moins un des éléments suivants : un moyen d'identification du destinataire, une éventuelle anomalie de correspondance et un élément fourni par le destinataire au cours d'une étape d'inscription à un service de transmission électronique de documents.

Ce procédé ne permet donc pas d'évaluer la qualité de
- la valeur probante de la signature juridique,
- la valeur probante du contenu et des mentions obligatoires,
- la valeur probante de l'archivage fidèle et durable,
- la valeur probante de l'intégrité et de la réception des transmissions,
- la valeur probante de la lecture automatique par ordinateur,
- la garantie de sécurité des attributs de confiance personnels,
- la garantie de confidentialité / du secret des objets de correspondance et/ou
- la garantie d'interopérabilité entre les prestataires : composition/archivage/transfert.

La présente invention vise à remédier à ces inconvénients.

L'invention est défini dans les revendications indépendantes. Les modes de realization particulières sont exposées dans les revendications dépendantes.

D'autres avantages, buts et caractéristiques de la présente invention ressortiront de la description qui va suivre faite, dans un but explicatif et nullement limitatif, en regard des dessins annexés dans lesquels :
- la figure 1 représente, schématiquement, sous forme d'un schéma fonctionnel, un mode de réalisation particulier du dispositif objet de la présente invention,
- les figures 2A et 2B représentent, schématiquement, des blocs fonctionnels mis en oeuvre dans un mode de réalisation particulier du procédé objet de la présente invention et
- les figures 3A à 5 représentent, sous forme d'un logigramme, des étapes mises en oeuvre dans un mode de réalisation particulier du procédé objet de la présente invention.

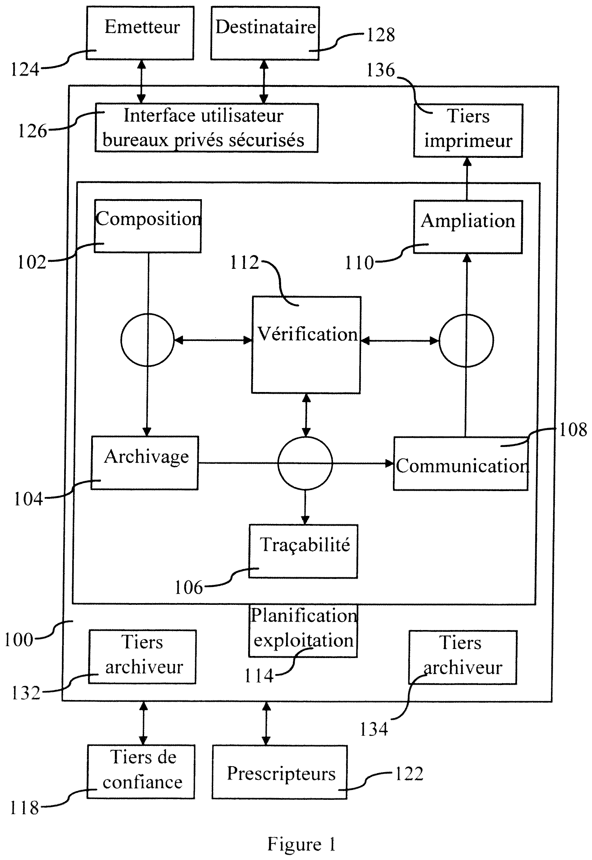

On observe, en figure 1, un service de sécurisation de transfert de données 100 comportant un service de composition de document 102, un service de conservation 104, un service de traçabilité 106, un service de communication 108, un service d'ampliation 110, un service de vérification 112, un service de planification 114 et un service d'exploitation 116. On observe aussi, en figure 1, un réseau 118 de tiers de confiance exploitant des bureaux d'enregistrement 120, un réseau 122 de tiers de confiance, un émetteur 124 connecté à un bureau privé sécurisé 126, un destinataire 128 connecté à un bureau privé sécurisé 130, un tiers archiveur d'émetteur 132, un tiers archiveur de destinataire 134 et un tiers imprimeur 136.

Le service de sécurisation de transfert de données 100 implémente chacun des aspects de la présente invention. Le service de composition de document 102 conserve des modèles ou masques de documents munis d'attributs, génériques pour tous les utilisateurs ou spécifiques pour les utilisateurs ayant fourni de tels modèles de documents ainsi que leur attributs. Ces attributs peuvent être affectés aux modèles de document par l'intermédiaire d'une interface utilisateur graphique (non représentée) dans laquelle des menus et des aides contextuelles permettent à l'utilisateur de choisir les attributs du modèle selon leur signification et leurs effets. Ces attributs, dits « de confiance », qui sont décrits plus bas, concernent, les identités des émetteurs et/ou destinataires de documents, les tâches ou ordonnancement des tâches, le contrôle et la validation des traitements effectués sur les documents issus de ces modèles et/ou le niveau de sécurité requis pour le document.

Lors de la composition d'un document à partir d'un modèle, l'utilisateur émetteur sélectionne un modèle, fournit les données pour documenter le modèle, en particulier au moins une identification du destinataire, une adresse électronique et, préférentiellement, une adresse postale du destinataire, si ces éléments ne sont pas déjà présents dans le modèle de document, ainsi que le message à transmettre au destinataire, par exemple les éléments d'une facture, d'un contrat, d'une convocation.

L'utilisateur émetteur peut aussi, lors de cette composition de document, modifier et compléter les attributs du modèle de document pour constituer des attributs du document à transmettre, par exemple sa date de remise au destinataire sous forme électronique, sa date de remise sous forme postale en cas d'échec de la remise sous forme électronique, sa date de fin de remise au destinataire sous forme électronique, le niveau d'authentification du destinataire nécessaire pour le document.

On observe que la composition de document, un système automatique, par exemple un ordinateur de l'utilisateur émetteur peut fournir les éléments nécessaires à la composition, par exemple sous forme d'un fichier de tableur comportant ces éléments, de manière ordonnée.

On observe que, lors d'une même session de composition de document, une pluralité de documents peuvent être composés manuellement ou automatiquement.

Lorsque le document est prêt à être transmis, l'utilisateur émetteur valide sa transmission au destinataire.

Le service de conservation 104 conserve tout document composé dans une mémoire non volatile dont l'accès est réservé à l'émetteur du document. Les conditions d'accès à cette mémoire sont définies avec l'utilisateur émetteur, selon des techniques connues, par exemple sous réserve de fourniture d'un nom d'utilisateur (en anglais « login ») et d'un mot de passe, ou sous réserve d'une authentification électronique. On observe que l'utilisateur émetteur peut mandater un tiers archiveur 132 pour venir automatiquement copier chaque document qu'il a composé. Le service de conservation 104 affecte chaque document qu'il reçoit d'un horodatage sécurisé.

Le service de traçabilité 106 garantit la traçabilité des différentes étapes effectuées sur un document. A cet effet, il calcule un certificat d'intégrité sur la base du document composé de telle manière que le certificat d'intégrité permette de détecter toute modification du document composé. Par exemple, le certificat d'intégrité est basé sur une fonction de hashage (en anglais « hash ») qui fournit un condensât. Le certificat d'intégrité est, d'une part, associé, par le service de conservation 104, au document mis en mémoire et, d'autre part, associé à une identification du document composé, par exemple une identification de l'utilisateur émetteur, de l'utilisateur destinataire et de l'horodatage de la fin de la composition du document, ces éléments étant conservés par un tiers de confiance, par exemple un huissier de justice.

Le service de communication 108 effectue une copie du document à transmettre au destinataire dans une mémoire non volatile uniquement accessible par ce destinataire, sous réserve du respect des conditions d'accès définies par les attributs de confiance du document, avec horodatage de la copie. Après l'accès par le destinataire, un tiers archiveur 134 mandaté par ce destinataire peut accéder à la copie du document et le copier.

Le service d'ampliation 110 effectue le choix du canal de communication avec le destinataire (par exemple par courrier électronique, minimessage, télécopie ou courrier postal) et la communication au destinataire d'au moins un message l'avertissant de la présence d'un document à son attention. Cette communication s'effectue, préférentiellement, en plusieurs étapes dont l'ordonnancement est défini par les attributs du document à transmettre. Généralement, cette communication commence, à une date définie par l'émetteur et représentée par au moins un attribut du document, sous forme d'un message électronique envoyé à une adresse électronique du destinataire. Par exemple, ce message électronique prend la forme d'un courrier électronique envoyé à l'adresse de courrier électronique (dite « adresse email ») ou d'un minimessage SMS (acronyme de « Short Message System » pour système à message court) envoyé à l'adresse téléphonique (c'est-à-dire au numéro de téléphone, généralement mobile) du destinataire.

Les attributs du document peuvent prévoir qu'à défaut d'accès, par le destinataire, dans un délai défini par au moins un attribut du document, au document qui lui est destiné et qui est conservé par le service de communication 108, qui en avertit alors le service d'ampliation 108, au moins un autre message soit transmis au destinataire, par le service de communication 108. A défaut d'accès, par le destinataire, dans un deuxième délai défini par au moins un attribut du document qui lui est destiné ou dès la fin du deuxième délai, selon les consignes de l'utilisateur émetteur représentées par les attributs de ce document, le service d'ampliation 110 transmet le document au tiers imprimeur 136 en vue de la transmission du document sous forme de courrier postal avec ou sans demande d'avis, ou accusé, de réception.

Le service de vérification 112 vérifie, lors de chaque communication entre deux services que l'ensemble des procédures nécessaires ont été correctement effectuées, et que l'ensemble des informations (modèle de document, information variable du document, attributs du document, horodatage, bonne réception par le service destinataire et accusé de réception transmis au service émetteur, par exemple) concernées par ces procédures sont suffisantes et ont bien été traitées. Chaque vérification effectuée par le service de vérification 112 donne lieu à un compte-rendu transmis au service de traçabilité 106, en vue de sa traçabilité.

Le service de planification 114 ordonnance l'ensemble des tâches effectuées par les différents services, certaines de ces tâches étant, on l'a vu, paramétrées en fonction des attributs associés aux documents.

Le service d'exploitation 116 ordonnance les opérations effectuées sur chaque document et, en particulier les appels aux services externes, par exemple les tiers archiveurs, d'authentification, de traçabilité, imprimeur, fournisseurs d'horodatage.

Les réseaux 118 et 122 de tiers de confiance exploitant des bureaux d'enregistrement 120, ou non respectivement, fournissent les données nécessaires à la vérification de la validité de certificats d'authentification d'utilisateurs ou de tiers, selon des techniques connues en soi, notamment en relation avec l'infrastructure à clés publiques connue sous le nom de « PKI » (acronyme de « public key infrastructure » pour infrastructure à clés publique).

Les bureaux d'enregistrement sont des organes du tiers de confiance. Ils assurent les relevés et l'actualisation des états civils avec les objets numériques personnels pour la composition, transmission et conservation légale des documents ou fichiers structurés. Chaque bureau d'enregistrement s'engage à protéger ces attributs de confiance ainsi que leur confidentialité. Avec son bureau d'enregistrement, le tiers de confiance assure ensuite l'authentification forte personnelle des utilisateurs et l'usage des objets numériques confiés pendant un instant, dit « instant de production » aux prestataires de services choisis par chaque utilisateur émetteur. Il assure un contrôle du résultat de l'opération réalisée par le prestataire ou opérateur de gestion documentaire, et, à cette occasion, il vérifie la restitution des attributs ou des objets de confiance qui ne peuvent être conservés que par le tiers de confiance.

L'utilisateur émetteur 124 et l'utilisateur destinataire 128 sont connectés à leur bureau privé sécurisé 126 et 130, respectivement, ces bureaux étant virtuels et mis en oeuvre, à distance avec des moyens d'accès sécurisés (par exemple, par saisie de nom d'utilisateur et de mot de passe, utilisation de clés transmises sur téléphone mobile ou authentification forte, selon les variantes ou les modes de fonctionnement choisis par les clients ou imposés par les procédures et les niveaux des attributs affectés aux documents).

Le tiers imprimeur 136 effectue l'impression du document à transmettre par voie postale et sa mise sous pli ainsi que la remise aux services postaux, avec ou sans demande d'avis de réception (ce dernier étant directement retourné à l'utilisateur émetteur).

Préférentiellement, lors de son inscription, un utilisateur fournit des éléments d'identification (nom, prénom, adresse électroniques, adresse téléphonique, adresse postale) et se voit attribuer un nom d'utilisateur (en anglais « login ») et un mot de passe. Pour l'authentifier, on lui envoie, à son adresse téléphonique, un mot de passe, par exemple aléatoire ou dépendant des éléments qu'il a fournit, l'utilisateur devant saisir ce mot de passe sur son bureau virtuel privé pour confirmer son inscription, ce qui a pour effet que son adresse téléphonique est vérifiée. Puis l'utilisateur accepte une convention de preuve indiquant le niveau d'authentification qu'il souhaite avoir lors de ses accès à son bureau privé virtuel.

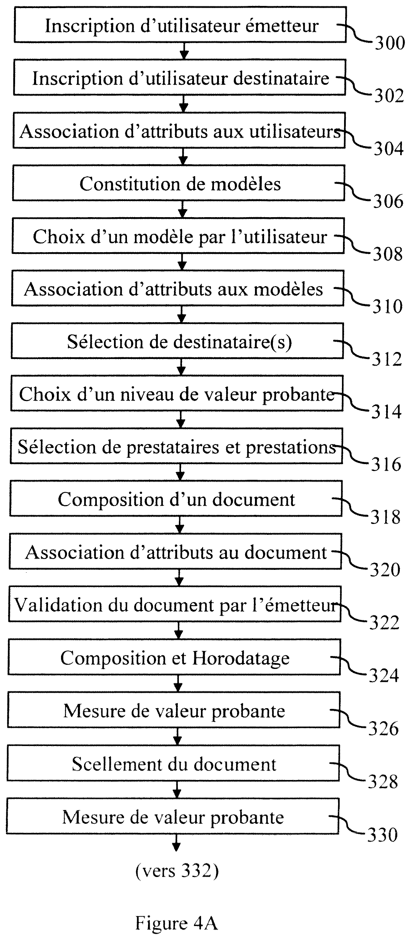

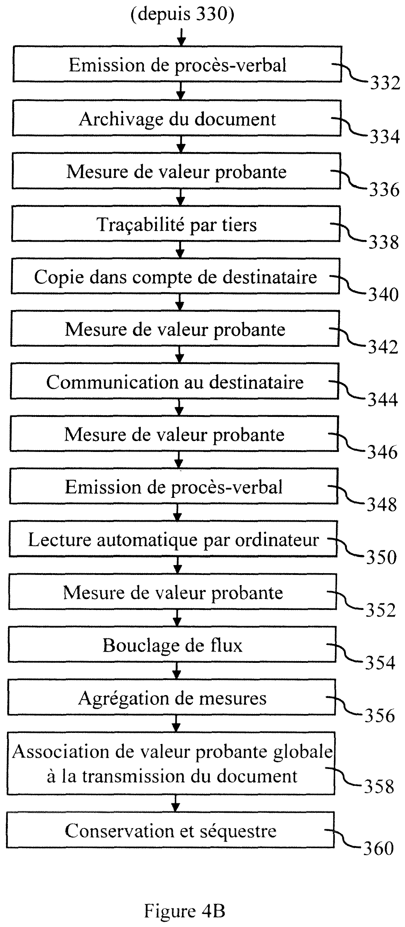

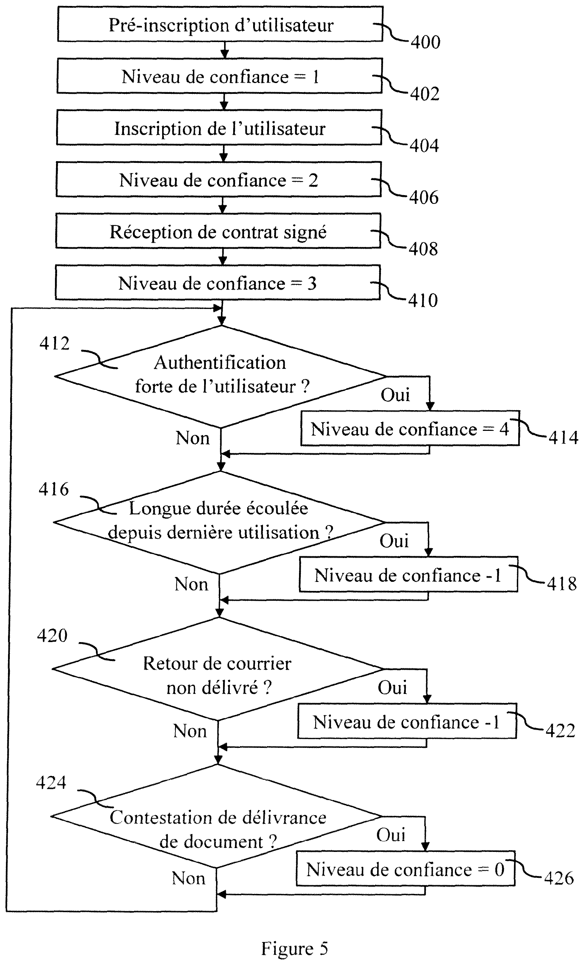

Des exemples d'attributs de confiance pouvant être affectés à un document et pouvant être mis en oeuvre dans les différents services illustrés en figure 1 sont donnés ci-dessous.
- l'identité numérique (aussi appelé « login »), attribut d'identification, servant pour la composition,
- le mot de passe ou certificat d'authentification, attribut d'identification, servant pour la composition,
- le formulaire et/ou fichier structuré, attribut de tâche ou d'ordonnancement, servant pour la composition,
- la procédure interne et/ou les mentions complémentaires, attribut de contrôle et/ou validation, servant pour la composition,
- la procédure externe et/ou mention obligatoire, attribut de contrôle et/ou validation, servant pour la composition, la dématérialisation et la communication,
- l'habilitation, attribut d'identification, servant pour la composition et la communication,
- le code secret et/ou la procuration, attribut d'identification, servant pour la dématérialisation,
- le fichier partenaire (destinataire) comportant les adresses d'un destinataire, attribut d'identification, servant pour la composition, la dématérialisation et l'ampliation,
- le carnet d'adresses de notification comportant les adresses des destinataires, attribut d'identification, servant pour la composition, la communication et l'ampliation,
- le compte courant de correspondance, attribut d'identification, servant pour la dématérialisation,
- le numéro du coffre-fort électronique, attribut d'identification, servant pour la dématérialisation,
- la notation de l'identité numérique en fonction de la déclaration en ligne et des documents justificatifs ou des attestations papiers retournées au bureau d'enregistrement (carte d'identité, chèque barré...) avec la mention « certifié conforme à l'original ». La notation d'origine devient dynamique car elle varie en fonction de la constitution du dossier personnel, de son évolution, et de la qualité des échanges effectuées, comme exposé en regard de la figure 5. Les échecs à la correspondance, comme les retours « n'habite pas à l'adresse indiquée », peuvent ainsi dégrader la crédibilité du domicile légal ou de la résidence principale retenue dans l'état civil et dans le carnet d'adresses ou fichier partenaires de l'utilisateur émetteur,
- la notation de la valeur probante de chaque étape et de la valeur probante globale de la transmission depuis l'utilisateur émetteur jusqu'à l'utilisateur émetteur, comme exposé en regard des figures 4A et 4B,
- l'autorité de certification publique, attributs d'identification, servant pour la dématérialisation,
- l'horodatage, servant pour la composition, la dématérialisation, la communication et l'ampliation et
- le type de document, pouvant prendre l'une des significations suivantes : confidentiel, critique, recommandé avec avis de réception ou simple.

Parmi les tiers dont les services ne sont pas représentés en figure 1, préférentiellement, ils comportent les trois types suivants, généralement en mode ASP (acronyme de « Application Service Provider » pour fournisseur de service applicatifs) :
- le « CRM » (acronyme de « customer relationship management » pour gestionnaire de relation client) qui fournit une évaluation de la confiance que l'on peut placer dans un utilisateur,
- le « CPM » (acronyme de « commercial paper management » pour gestionnaire de documents commerciaux) qui effectue l'affacturage, le virement commercial ou la titrisation.
- le « TRM » (acronyme de « treasury relationship management » pour gestionnaire de relations de trésorerie) qui assure les fonctions de « bons à payer » et peut être connecté à un serveur de proximité spécialisé dans les transferts sans mouvements de fonds pour le règlement des factures et des avoirs entiers avec une notification aux trésoriers des personnes morales, des balances de leurs échanges.

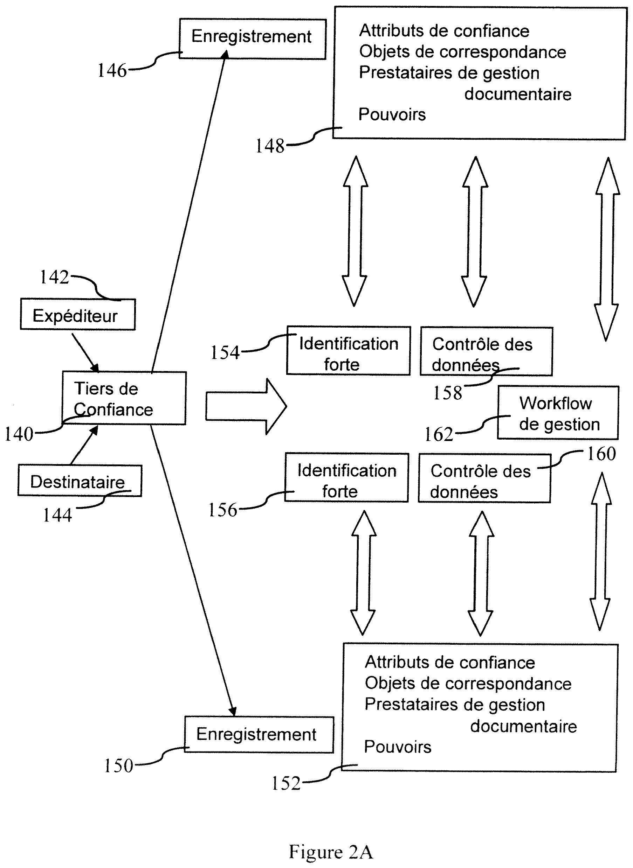

On observe, en regard de la figure 2A que, parmi les blocs fonctionnels mis en oeuvre dans un mode de réalisation de la présente invention, le tiers de confiance 140 est en relation avec l'expéditeur 142 du document et avec le destinataire 144 du document et avec des fonctions d'enregistrement, respectivement 146 et 150 des attributs de confiance, des objets de correspondance, des prestataires de gestion documentaire et de pouvoirs, respectivement 148 et 152.

Les attributs de confiance comportent, par exemple, un matricule, une notation d'identité numérique, une signature et des conventions. Les objets de correspondance comportent, par exemple, des modèles de prestations, des procédures, des accusés de réception et des lectures automatique par ordinateur « MdN » (acronyme de « Message disposition notification » pour notification de disposition de message). On note ici que la lecture automatique par ordinateur constitue le justificatif et la preuve de réception : validité du certificat de signature, intégrité du fichier transféré, cohérence entre fichier structuré et liste récapitulative, énoncé des anomalies, bloquantes ou non. Parmi les prestataires de gestion documentaire et les pouvoirs, on trouve, généralement, comme premier opérateur, l'opérateur chargé de la composition d'un document, comme deuxième opérateur, l'opérateur chargé du scellement d'un document, comme troisième opérateur, l'opérateur chargé de l'archivage d'un document (« CFE »), comme quatrième opérateur, l'opérateur chargé de la commutation (« CCC »), comme cinquième opérateur, l'opérateur chargé de la lecture automatique par ordinateur, comme sixième opérateur, l'opérateur chargé de l'éditique, et ainsi de suite.

Les fonctions effectuées sur les données enregistrées pour l'expéditeur et le destinataire comportent une fonction d'identification forte, respectivement 154 et 156 et une fonction de contrôle de données, respectivement 158 et 160.

Une fonction de gestion de flux de tâches (en anglais « workflow ») de gestion 162 est gérée par le tiers de confiance.

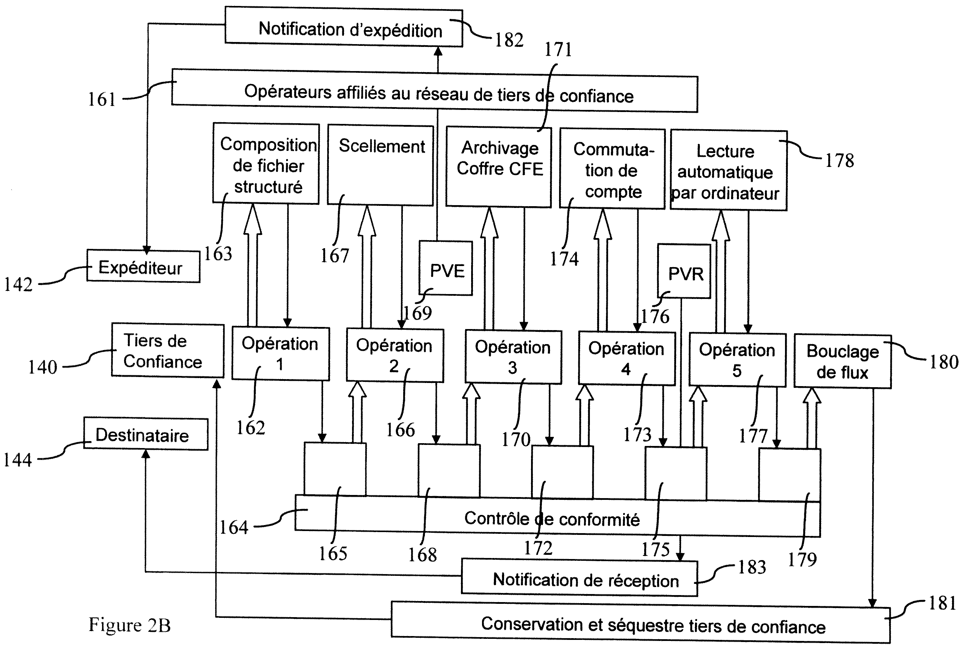

Comme illustré en figure 2B, ce flux de tâches comporte, lors de la soumission d'un document à la transmission depuis l'expéditeur 142 au destinataire 144, par l'intermédiaire du tiers de confiance 140, en faisant appels aux opérateurs affiliés au réseau de tiers de confiance 161, d'abord une première opération 162 qui transfère, à un premier opérateur 163 les éléments pour la composition de fichiers structurés et reçoit, en retour, un fichier structuré. Une première fonction de contrôle de conformité de la composition 165 est effectuée par un ensemble de fonctions de contrôle 164 et le résultat de ce premier contrôle est transféré au bloc fonctionnel d'une deuxième opération 166.

La deuxième opération 166 transfère, à un deuxième opérateur 167 les éléments pour le scellement de chaque fichier du document et reçoit, en retour, un fichier scellé. Une deuxième fonction de contrôle de conformité du scellement 168 est effectuée par l'ensemble de fonctions de contrôle 164 et le résultat de ce deuxième contrôle est transféré au bloc fonctionnel de la troisième opération 166.

Un procès verbal d'émission 169 est alors constitué et une notification d'expédition 182 est transmise à l'expéditeur.

La troisième opération 170 transfère, à un troisième opérateur 171 les éléments pour l'archivage de chaque fichier scellé du document et reçoit, en retour, une confirmation d'archivage. Une troisième fonction de contrôle de conformité de l'archivage 172 est effectuée par l'ensemble de fonctions de contrôle 164 et le résultat de ce troisième contrôle est transféré au bloc fonctionnel d'une quatrième opération 173.

La quatrième opération 173 transfère, à un quatrième opérateur 174 les éléments pour la commutation de comptes de chaque fichier scellé du document et reçoit, en retour, une confirmation de commutation. Une quatrième fonction de contrôle de commutation 175 est effectuée par l'ensemble de fonctions de contrôle 164 et le résultat de ce quatrième contrôle est transféré au bloc fonctionnel d'une cinquième opération 177.

Un procès-verbal de réception 176 est émis et une notification de réception 183 est transmise au destinataire 144.

La cinquième opération 177 transfère, à un cinquième opérateur 178 les éléments pour la lecture automatique par ordinateur de chaque fichier scellé du document et reçoit, en retour, une confirmation de lecture automatique par ordinateur. Une cinquième fonction de contrôle de lecture automatique par ordinateur 179 est effectuée par l'ensemble de fonctions de contrôle 164 et le résultat de ce troisième contrôle est transféré au bloc fonctionnel d'un bouclage de flux 180.

Cette fonction de bouclage de flux 180 transfère, pour des fonctions de conservation et séquestre 181, effectuées par le tiers de confiance, les éléments et notations de toutes les étapes de transmission du document.

Chacune des fonctions de contrôle de conformité génère une notation de l'opération à laquelle elle correspond. La fonction de bouclage de flux agrège ces notations partielles pour générer une notation globale de la transmission du document depuis l'expéditeur 142 jusqu'au destinataire 144.

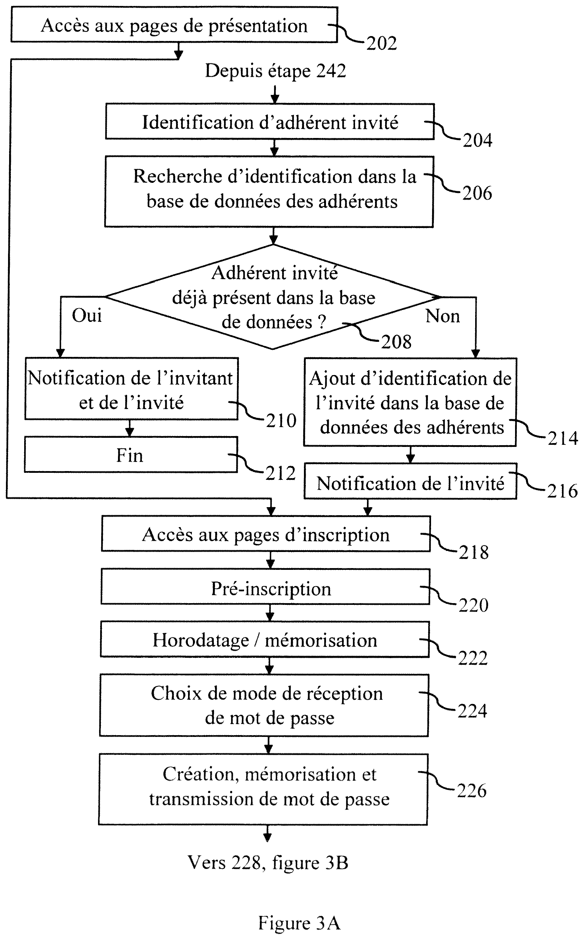

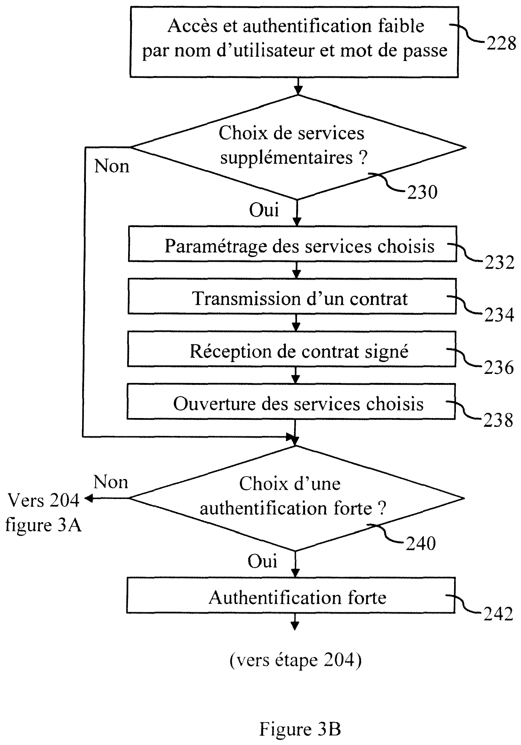

Les figures 3A et 3B illustrent des étapes suivies pour l'inscription d'utilisateurs aux services de communication sécurisée mettant en oeuvre les différents aspects de la présente invention. On observe, en figure 3A, une étape 202 au cours de laquelle un utilisateur non encore adhérent accède à une information de description de l'offre de service, par exemple sur un site de la toile. S'il décide de devenir adhérent d'un des services proposés, il passe à l'étape 218.

Pour des utilisateurs invités, au cours d'une étape 204, un utilisateur déjà adhérent fournit une identification d'un adhérent invité auquel il souhaite faire parvenir des documents sécurisés. Cette identification comporte au moins une adresse électronique de l'adhérent invité. Au cours d'une étape 206, l'identification de l'adhérent invité est comparée aux identifications d'adhérents déjà répertoriés dans la base de données des adhérents pour vérifier qu'il n'est pas déjà adhérent.

Au cours d'une étape 208, on détermine si l'adhérent invité est déjà référencé dans la base de données des utilisateurs.

Si l'utilisateur invité est déjà adhérent, au cours d'une étape 210, on notifie cette état d'adhérent à l'utilisateur invitant et on notifie à l'utilisateur invité que l'invitant à souhaité l'inscrire. La phase d'inscription de l'utilisateur invité s'achève alors à l'étape 212.

Si l'utilisateur invité n'est pas déjà adhérent, au cours d'une étape 214, son identification est ajoutée dans cette base de données et est affectée d'un statut de pré-inscrit et d'une notation minimale correspondant aux adhérents déclarés par des tiers. Puis, au cours d'une étape 216, un courrier électronique est adressé à l'adhérent invité pour lui indiqué quel adhérent l'invite à s'inscrire au service de communication sécurisé, que le service de réception de document est gratuit et à quelle adresse électronique, connue sous le nom d'URL (acronyme d' « universal resource locator » pour localiseur universel de service) il doit se rendre, par exemple en cliquant sur un lien inséré dans le courrier électronique, pour s'inscrire gratuitement au service de communication sécurisé.

Au cours d'une étape 218, le futur adhérent accède au site de la toile (en anglais web) correspondant à cette adresse électronique URL et, au cours d'une étape 220, procède à sa pré-inscription. A cet effet, au cours de l'étape 220, il fournit ou valide son nom, son prénom, sont adresse postale (professionnelle et/ou personnelle), son numéro de téléphone fixe, son numéro de télécopieur, son numéro de téléphone mobile. Il accède, lors de la validation de ces informations, à son numéro d'adhérent et à un contrat d'adhésion, aux conditions générales du service de réception de documents et à son nom d'utilisateur, qu'il peut éventuellement modifier. L'étape 220 est horodatée et les renseignements fournis sont enregistrés dans la base de données d'utilisateurs, au cours d'une étape 222.

Au cours d'une étape 224, le futur utilisateur choisit un mode de réception de son mot de passe, par exemple entre la réception par télécopie, par minimessage ou par courrier postal.

Au cours d'une étape 226, un mot de passe est attribué à l'utilisateur, mis en mémoire dans la base de données d'utilisateurs et transmis à l'utilisateur selon le mode de réception qu'il a choisi avec une invitation à valider son inscription par accès à son bureau privé virtuel sécurisé.

Lors de son accès à ce bureau, le nouvel utilisateur fournit son nom d'utilisateur et le mot de passe qui lui a été transmis, au cours de l'étape 228. Au cours d'une étape 230, l'utilisateur détermine s'il souhaite utiliser d'autres services proposés que la simple réception de documents. Si non, il passe à l'étape 240. S'il souhaite utiliser plus que le service de réception de document, l'utilisateur choisit, au cours d'une étape 232, les paramètres des services qu'il souhaite utiliser. En particulier, l'utilisateur fournit l'identité, les adresses postale et électronique(s) des personnes habilitées, au sein de son organisation, à émettre ou recevoir des documents, des pouvoirs pour ces personnes, les coordonnées du tiers archiveur éventuel qu'il souhaite voir prendre copie des documents émis ou reçus, les moyens de paiement des prestations qu'il souhaite utiliser, les éléments de signature personnelle et les niveaux de signature qu'il peut et souhaite mettre en oeuvre.

Pour toutes ces prestations additionnelles, au cours d'une étape 234, un contrat de prestation écrit est transmis à l'utilisateur par voie électronique et postale, le retour, par voie postale, d'un exemplaire signé lui étant demandé.

Au cours d'une étape 236, le retour de contrat, signé par l'utilisateur, est reçu, vérifié et enregistré et les prestations choisies par l'utilisateur lui deviennent accessibles, à partir d'une étape 238. Puis on passe à l'étape 240, au cours de laquelle le nouvel utilisateur décide s'il souhaite bénéficier d'une authentification forte. Si oui, au cours d'une étape 242 on procède à son authentification forte de manière connue en soi. Si non, ou à la fin de l'étape 242, on accède à l'étape 204 afin que le nouvel utilisateur puisse inviter de nouveaux adhérents.

On observe, en figure 4A, qu'après s'être inscrit, au cours d'une étape 300 détaillée en figures 3A et 3B, l'utilisateur disposant des droits d'accès au service d'envoi de documents recommandés peut décider d'envoyer un document à un destinataire. Dans ce cas, après s'être identifié, au cours d'une étape 302, l'utilisateur émetteur d'un document recommandé fournit l'identification du destinataire du document. On note que si ce destinataire n'est pas référencé dans la base de données des utilisateurs du service, on le notifie à l'émetteur et on effectue une étape d'inscription détaillée à partir de l'étape 204, en figures 3A et 3B.

Au cours d'une étape 304, on associe des attributs aux utilisateurs émetteurs et destinataire.

Puis, au cours d'une étape 306, l'utilisateur émetteur peut constituer un modèle de document, étape 306, ou accéder à un modèle de document qui lui correspond, c'est-à-dire un modèle générique disponible pour tous les utilisateurs émetteurs ou un modèle qu'il a fourni et qui a été validé, étape 308. Dans chacun de ces cas, des attributs de document sont associés au modèle de document, au cours d'une étape 310, par défaut et/ou par choix de l'utilisateur.

Au cours d'une étape 312, l'utilisateur émetteur effectue une sélection de destinataire(s). Dans la suite de la description, one ne considère qu'un seul destinataire mais l'invention s'applique, par duplication des étapes qui concerne le destinataire, à un nombre quelconque de destinataires.

Au cours d'une étape 314, l'utilisateur effectue un choix de niveau de valeur probante que la transmission du document doit atteindre ou dépasser.

Au cours d'une étape 316, on effectue une sélection de prestataires et de prestations en fonction de la notation qu'ils sont susceptibles d'obtenir, afin que la somme de leurs notations partielles permette d'atteindre la notation globale requise par l'utilisateur expéditeur. Ce choix peut être effectué en tenant compte d'un coût associé à chacune des opérations effectuées par chacun des opérateurs.

Au cours d'une étape 318, l'utilisateur expéditeur compose le document à transmettre au destinataire, c'est-à-dire qu'il fournit des données additionnelles pour éditer un document à partir d'un modèle de document. Ensuite, l'utilisateur expéditeur effectue une association d'attributs au document, au cours d'une étape 320. Les données, documents, conditions de délivrance et coordonnées des utilisateurs émetteurs et destinataire sont ainsi affectées d'attributs de confiance attachés au modèle, à l'émetteur et/ou au destinataire, au cours de l'étape 320. L'utilisateur expéditeur effectue la validation du document, au cours d'une étape 322.

Au cours d'une étape 324, l'opérateur de composition effectue la composition du document, comme spécifié par les attributs du document et, parallèlement, un horodatage de la validation par l'utilisateur expéditeur est réalisé.

Au cours d'une étape 326, on effectue la notation de la valeur probante associée à l'opération de composition, par exemple en fonction de l'opérateur de composition, des tâches qu'il exécute et des retours qu'il fournit.

Au cours d'une étape 328, un deuxième opérateur effectue le scellement du document composé.

Au cours d'une étape 330, on effectue la notation de la valeur probante associée à l'opération de scellement, par exemple en fonction de l'opérateur de scellement, des tâches qu'il exécute, des fonctions de chiffrement et/ou de signature qu'il met en oeuvre et des retours qu'il fournit.

Au cours d'une étape 332 (voir figure 4B), on dresse un procès-verbal d'émission, et on le transmet à l'utilisateur expéditeur, par exemple sous forme de courrier électronique. Au cours d'une étape 334, on effectue l'archivage du document scellé.

Au cours d'une étape 336, on effectue la notation de la valeur probante associée à l'opération d'archivage, par exemple en fonction de l'opérateur d'archivage, des tâches qu'il exécute, des fonctions de chiffrement et/ou de signature qu'il met en oeuvre et des retours qu'il fournit.

Au cours d'une étape 338, un dépôt légal du document et des pièces attachées est effectué auprès d'un tiers, par exemple un huissier, qui retourne un numéro de dépôt légal.

Au cours d'une étape 340, une copie du document archivé dans le coffre-fort électronique de l'émetteur est archivée dans une mémoire à la seule disposition du destinataire, mémoire appelée « compte courant ».

Au cours d'une étape 342, on effectue la notation de la valeur probante associée à l'opération de commutation de comptes effectuée au cours de l'étape 340, par exemple en fonction de l'opérateur de commutation, des tâches qu'il exécute, des fonctions de chiffrement et/ou de signature qu'il met en oeuvre et des retours qu'il fournit.

Un message est ensuite transmis au destinataire, immédiatement ou à la date choisie par l'émetteur, par le canal que le destinataire a choisi, pour l'avertir de la présence d'un document à son attention et un message est transmis par courrier électronique, à l'émetteur pour l'informer de la mise à disposition du document au destinataire, au cours d'une étape 344.

Au cours d'une étape 346, on effectue la notation de la valeur probante associée à l'opération de transmission à l'utilisateur destinataire, par exemple en fonction de l'opérateur de transmission, des tâches qu'il exécute et des retours qu'il fournit.

Au cours d'une étape 348, on dresse un procès-verbal de réception, dès que l'utilisateur destinataire prend connaissance du message, et on le transmet à l'utilisateur expéditeur, par exemple sous forme de courrier électronique.

Au cours d'une étape 350, on effectue une lecture automatique par ordinateur. Au cours d'une étape 352, on effectue la notation de la valeur probante associée à l'opération de lecture automatique par ordinateur, par exemple en fonction de l'opérateur de lecture automatique par ordinateur, des tâches qu'il exécute et des retours qu'il fournit.

Au cours d'une étape 354, on effectue un bouclage de flux, celui-ci étant répété de manière séquentielle et, au cours d'une étape 356, on détermine une notation globale de la valeur probante de la transmission du document depuis l'utilisateur expéditeur jusqu'à l'utilisateur destinataire, par agrégation des notations partielles effectuées, notamment au cours des étapes 326, 330, 336, 342, 346 et 352, comme exposé en regard des tableaux donnés plus loin.

Au cours d'une étape 358, on effectue une association de la valeur probante globale au document objet de la transmission.

Au cours d'une étape 360 le tiers de confiance effectue la conservation et le séquestre du document, des procès-verbaux, d'au moins la notation de valeur probante globale et, éventuellement, les notations partielles.

Le tableau donné ci-dessous est découpé en deux parties, la première concernant les colonnes de gauche et la seconde les colonnes de droite. La lecture de ce tableau s'effectue comme suit :
- sur la première ligne sont représentées les différentes étapes susceptibles de concerné un type de prestation, avec, en dessous, les nombres maximum et minimum de points attribués aux prestations,
- les lignes suivantes concernent, chacune, un type de prestation : chaque nombre dans une colonne indiquant le nombre de points attribués à cette prestation pour une étape donnée (l'absence de nombre signifiant « 0 » point),
- dans la colonne de gauche, les notes sont ramenées sur 20 pour être plus facilement appréhendées par les utilisateurs (par multiplication du nombre de points obtenus, sur 135, par un facteur de 20/135) et arrondie au demi-point le plus proche.

Les abréviations utilisées sont les suivantes :
- Colonne 1 : « Exp Env d.o » signifie « Expéditeur envoi des données »,
- Colonne 2 : « Tdc Cdc Idd » signifie « Tiers de confiance Contrôle de Conformité Identité et Données »,
- Colonne 3 : « Tdc Prép Wkf Se/pr clépu » signifie « Tiers de confiance Préparation du Workflow de Gestion hybride ou Dématérialisée »,
- Colonne 4 : « Ope Comp Scel » signifie « Opérateur de Composition et de scellement du fichier »,
- Colonne 5 : « Tdc Cdc c&s » signifie « Tiers de confiance Contrôle de Conformité Composition et de scellement du fichier »,
- Colonne 6 : « Tdc Not Exp Pve » signifie « Tiers de confiance Notification Expéditeur Envoi / Procès Verbal de Signature Juridique »,
- Colonne 7 : « Op TA doc » signifie « Opérateur d'Archivage (Tiers d'archivage) du document original en 1-2 spécimens (cfe) »,
- Colonne 8 : « Tdc Cdc Arc doc » signifie « Tiers de confiance Contrôle de Conformité Archivage à valeur probante »,
- Colonne 9 : « Op CPs » signifie « Opérateur de Correspondance sécurisée (Comptes courants de correspondance) »,
- Colonne 10 : « Tdc Cdc CPs » signifie « Tiers de confiance Contrôle de Conformité Correspondance sécurisée »,
- Colonne 11 : « Tdc Not Des Pvd » signifie « Tiers de confiance Notification Destinataire Réception/ Procès Verbal de Signature Juridique »,
- Colonne 12 : « Op Co Sc aR » signifie «Opérateur de Composition et de scellement du Coupon AR »,
- Colonne 13 : « Tdc Cdc AR » signifie « Tiers de confiance Contrôle de Conformité Composition et de scellement du Coupon AR »,
- Colonne 14 : « Ope Arc AR » signifie « Opérateur d'Archivage de l'AR »,
- Colonne 15 : « Tdc Cdc Arc AR » signifie « Tiers de confiance Contrôle de Conformité de l'archivage de l'AR »,
- Colonne 16 : « Ope Lao transf » signifie « Opérateur de transmission AS2 lecture Automatique par ordinateur destinataire »,
- Colonne 17 : « Tdc Cdc Lao transf » signifie « Tiers de confiance Contrôle de Conformité lecture Automatique par ordinateur »,
- Colonne 18 : « Dest mdn retour » signifie « Destinataire envoi retour du MDN : justificatif de bonne lecture informatique univoque »,
- Colonne 19 : « Tdc Cdc mdn retour » signifie « Tiers de confiance Contrôle de Conformité du MDN / Justificatif provenant du destinataire » et
- Colonne 20 : « Tdc Csv Mdn » signifie « Tiers de confiance Conservation et séquestre du MDN ».
- ligne 1 : « FI/LHS » signifie « Lettre hybride Simple » et obtient la note de 3/20,
- ligne 2 : « FI/LHR » signifie « Lettre hybride Recommandée » et obtient la note de 4/20,
- ligne 3 : « FI/LHRAR » signifie « Lettre hybride Recommandée Accusé de Réception signé » et obtient la note de 6/20
- ligne 4 : « FI/LDS » signifie « Lettre Dématérialisée Simple » et obtient la note de 7/20,
- ligne 5 : « FI/LDR » signifie « Lettre Dématérialisée Recommandée » et obtient la note de 8/20,
- ligne 6 : « FI/LDRAR » signifie « Lettre Dématérialisée Recommandée Accusé de Réception » et obtient la note de 12/20,
- ligne 7 : « FI/LDRARC » signifie « Lettre Dématérialisée Recommandée Accusé de Réception Cryptée » et obtient la note de 11/20,
- ligne 8 : « FS/DHR » signifie « Fichier Structuré EDI ou XML / Document hybride Recommandé » et obtient la note de 8/20,
- ligne 9 : « FS/DHRAR » signifie « Document Hybride Recommandé Accusé de Réception » et obtient la note de 9/20,
- ligne 10 : « FS/DDR » signifie « Document Dématérialisé Recommandé » et obtient la note de 10/20,
- ligne 11 : « FS/DDRAR » signifie « Document Dématérialisé Recommandé Accusé de Réception » et obtient la note de 15/20,
- ligne 12: « FS/DDRARLAO » signifie « Document Dématérialisé Recommandé Accusé de Réception avec lecture automatique univoque par ordinateur » et obtient la note de 18,50/20.

| | Exp Env d.o | Tdc Cdc Idd | Tdc Prép Wkf Se/pr clépu | Ope Comp Scel | Tdc Cdc c&s | Tdc Not Exp Pve | ope TA doc | Tdc Cdc Arc doc | ope CPs |
|---|---|---|---|---|---|---|---|---|---|
| Pts | 1 | 2 | 3 | 4 | 5 | 6 | 7 | 8 | 9 |
| 135 | 8 | 8 | 4 | 20 | 4 | 6 | 10 | 4 | 10 |
| FI | 2 | 2 | | | | 1 | 1 | 4 | 5 |
| LHS | | | | | | | | | |
| FI | 4 | 4 | | | | 1 | 1 | 4 | 10 |
| LHR | | | | | | | | | |
| FI | 6 | 6 | | | | 1 | 4 | 4 | 10 |
| LHR | | | | | | | | | |
| AR | | | | | | | | | |
| FI | 8 | 8 | | 5 | 4 | 2 | 4 | 4 | 10 |
| LDS | | | | | | | | | |
| FI | 8 | 8 | 1 | 5 | 4 | 3 | 4 | 4 | 10 |
| LDR | | | | | | | | | |
| FI | 8 | 8 | 2 | 5 | 4 | 3 | 4 | 4 | 10 |
| LDR | | | | | | | | | |
| AR | | | | | | | | | |
| FI | 8 | 8 | 4 | | | 3 | 4 | 4 | 10 |
| LDR | | | | | | | | | |
| ARC | | | | | | | | | |
| FS | 4 | 4 | | 20 | 4 | 4 | 1 | 4 | 10 |
| DHr | | | | | | | | | |
| FS | 4 | 4 | 2 | 20 | 4 | 4 | 4 | 4 | 10 |
| DHr | | | | | | | | | |
| AR | | | | | | | | | |
| FS | 8 | 8 | 2 | 20 | 4 | 4 | 4 | 4 | 10 |
| Ddr | | | | | | | | | |
| FS | 8 | 8 | 3 | 20 | 4 | 4 | 4 | 4 | 10 |
| Ddr | | | | | | | | | |
| AR | | | | | | | | | |
| FS | 8 | 8 | 4 | 20 | 4 | 4 | 4 | 4 | 10 |
| Ddr | | | | | | | | | |
| AR | | | | | | | | | |
| Lao | | | | | | | | | |

| Tdc Cdc CPs | Tdc Not Des Pvd | ope Co Sc aR | Tdc Cdc AR | ope Arc AR | Tdc Cdc Arc AR | ope Lao transf | Tdc Cdc Lao transf | Dest mdn retour | Tdc Cdc mdn retour | Tdc Csv Mdn |
|---|---|---|---|---|---|---|---|---|---|---|
| 10 | 11 | 12 | 13 | 14 | 15 | 16 | 17 | 18 | 19 | 20 |
| 4 | 6 | 10 | 4 | 10 | 4 | 10 | 4 | -- | 4 | 5 |
| 4 | | | | | | | | | | |
| 4 | | | | | | | | | | |
| 4 | | | | | | | | | 2 | 2 |
| 4 | | | | | | | | | | |
| 4 | | | | | | | | | | |
| | 4 | 10 | 4 | 10 | 4 | | | | | |
| | 4 | 10 | 4 | 10 | 4 | | | | | |
| 4 | | | | | | | | | | |
| 4 | | | | | | | | | | |
| 4 | | | | | | | | | | |
| 4 | 4 | 10 | 4 | 10 | 4 | | | | | |
| 4 | 4 | 10 | 4 | 10 | 4 | 10 | 4 | | 4 | 5 |

On observe, en figure 5 que, après l'étape de pré-inscription d'un utilisateur, étape 400, l'attribut représentant le niveau de confiance lié à cet utilisateur prend la valeur de « 1 », étape 402. Après l'étape d'inscription de l'utilisateur, étape 404, le niveau de confiance prend la valeur de « 2 », étape 406. A réception du contrat de service signé par l'utilisateur, étape 408, le niveau de confiance prend la valeur de « 3 », étape 410.

On détermine alors si l'utilisateur effectue une étape de fourniture d'une authentification électronique forte, au cours d'une étape 412. Si oui, le niveau de confiance associé à l'utilisateur prend la valeur de « 4 » au cours d'une étape 414. Sinon ou à la fin de l'étape 414, au cours d'une étape 416, on détermine si une longue durée, par exemple supérieure à trois mois, s'est écoulée depuis la dernière utilisation des services par l'utilisateur. Si c'est le cas, au cours d'une étape 418, on décrémente de « 1 » le niveau de confiance associé à cet utilisateur, étant à noter que chaque nouvelle utilisation du service par l'utilisateur restaure son niveau de confiance antérieur.

Sinon ou à la fin de l'étape 418, au cours d'une étape 420, on détermine si un courrier postal qui lui a été acheminé n'a pas été délivré au destinataire. Si c'est le cas, au cours d'une étape 422, on décrémente de 1 le niveau de confiance associé à l'utilisateur.

Sinon ou à la fin de l'étape 422, au cours d'une étape 424, on détermine si l'utilisateur a contesté la délivrance d'un document. Si oui, le niveau de confiance associé à l'utilisateur prend la valeur « 0 ». Sinon, ou à la fin de l'étape 426, on retourne à l'étape 412.

Comme on le comprend en regard de la figure 5, chaque utilisateur se voit attribuer un niveau de confiance dynamique, qui évolue au cours du temps, selon les événements qui affectent ses relations avec les services proposés.

Ce niveau de confiance associé à un destinataire potentiel d'un document est utilisé pour aider l'utilisateur émetteur ou le service automatique à choisir les conditions d'identification ou de délivrance d'un document au destinataire, par exemple le délai séparant la communication électronique d'une notification de présence d'un document à la disposition du destinataire et la transmission du document à un imprimeur ou le niveau d'authentification requis pour pouvoir accéder à un document.

Ainsi, le dispositif objet de la présente invention et le procédé qu'il met en oeuvre garantissent l'intégralité des processus précités de manière à garantir qu'aucun trou de sécurité, de confidentialité, et d'authenticité n'existe tout au long les échanges et opérations réalisées entre réseau de tiers de confiance et le prestataire. De plus, toute anomalie peut être régularisée rétroactivement soit sur le même site informatique soit sur deux sites distants. Le mode de fonctionnement garantit l'interopérabilité dans l'hypothèse où les différentes opérations de la « chaîne de valeur documentaire » sont réalisées par plusieurs prestataires autour du réseau de tiers de confiance, par exemple, prestataire de facturation et prestataire d'archivage légal.

La mise en oeuvre de la présente invention fourni ainsi, par son mode de fonctionnement :
- une garantie de sécurité (certification, cryptage),
- une garantie de confidentialité (chiffrements de contenu et contenant),
- une garantie d'identité dynamique,
- une garantie d'intégrité de fichier,
- une garantie de conformité (procédures et mentions obligatoires),
- une garantie de légalité (disposition légales ou fiscales EDI, XML, signature),
- une garantie de valeur juridique probante (enregistrement tiers de confiance),
- une garantie de traçabilité (journalisation des opérations),
- une garantie d'appariement ou d'adossement de courrier (dossiers légaux),
- une garantie d'interopérabilité (inter prestataires de services de confiance),

Le serveur de vérification 112 enregistre les tâches réalisées (il fournit une liste récapitulative des tâches) par les quatre modules (service de composition de document 102, service de conservation 104, service de communication 108 et un service d'ampliation 110), quels que soient leurs lieux géographiques (centralisés ou délocalisés) avec les requêtes vis à vis du tiers de confiance pour vérifier :
- l'identité du titulaire,
- l'identité des fondés de pouvoirs,
- les habilitations personnelles (tâches spécifiques),
- les formulaires déposés,
- les procédures des formulaires,
- les login/password,
- les fichiers partenaires ou contreparties,
- le choix de signature (« SEP », « SEA », « SEQ », expliquées plus loin) et
- la procuration de chiffrement avec le code secret.

Si les documents sont traités de manière dispersée et en différé avec les lots rompus, la consolidation des tâches permet de constater les anomalies, et de retrouver les documents en souffrance.

La présente invention met en oeuvre la notion de « période de valeur », ce qui veut dire que le délai, par exemple de douze heures, de validité d'un courrier à transmettre, à un assuré par exemple, pourra automatiquement périmer des tâches inachevées et déclencher une alerte auprès de l'émetteur du document.

Les listes de tâches ou « jobs lists » sont transmises en mode très sécurisé par la technologie « flowtrack », qui assure les contrôles de l'opérateur habilité à effectuer une tâche, du couple de machines en communication entre elles, de la tâche d'encryption et du blocage en cas de non conformité). Cette technologie permet d'ordonnancer les tâches avec les attributs de confiance nécessaires vis-à-vis de chaque opérateur et fonction d'opérateur avec un horodatage, une empreinte, par exemple de type « sha1 », le couple de transmission (tiers de confiance/opérateur) et le nom ou la fonction de la machine ou du serveur adressé (composition, commutation, archivage, ampliation, communication). Toute anomalie dans l'ordonnancement sort une alerte ou un arrêt d'ordonnancement. Le traitement des flux d'ordonnancement est « parallélisé » pour gérer la scalabilité des traitements documentaires à valeur juridique probante.

Préférentiellement, certaines informations ne sont, en aucun cas, enregistrées (par exemple celles de type nom d'utilisateur et mot de passe ou la procuration chiffrement/code secret) mais le système mémorise (en anglais « log ») le résultat de l'opération ou du contrôle. Bien entendu ces informations sont horodatées.

Les opérations les plus critiques peuvent être encadrées dans la mémoire de « log » : le début d'une opération, la fin d'une opération et le statut résultat. Ceci renforce la validité de l'information. Par exemple, pour l'horodatage d'une signature d'un document, on horodate le condensât, ou « hash », du document (et on obtient une preuve de possession sûre) puis on signe le condensât et on horodate le résultat (et ainsi on obtient un intervalle de signature précis).

On observe que si on utilise un mécanisme de type connu par l'homme du métier sous le nom de « syslog », il est préférable :
- de mettre en oeuvre un protocole de communication sécurisée (même si tout est dans la même salle blanche) avec contrôle de « l'identité » des machines concernées,
- de « signer » les données mémorisées ou « logs », par une procédure de signature symétrique, la clef de signature étant générée à intervalle régulier et échangée par un processus crypté,
- de contre-signer les données mémorisées à intervalle de temps régulier avec une signature asymétrique.

Les signatures, symétriques et contre-signatures, asymétriques peuvent être enregistrées dans une log spécifique ce qui permet de ne pas perturber le contenu de la log informations. Les logs centralisées doivent être enregistrées sur deux machines différentes en temps réel.

Le fait de mémoriser en central n'autorise pas à ne pas mémoriser en local, sur la machine qui réalise l'opération. En revanche, les logs locales n'ont pas besoin d'être renforcées.

Enfin toutes les machines participantes doivent être synchronisées en temps (en anglais « time-synchrones »).

Dans donne, dans toute la fin de la description, des informations complémentaires aux informations données ci-dessus, pour constituer des modes de réalisation particuliers ou des variantes des modes de réalisation exposés ci-dessus.

Le système de dématérialisation est un ensemble de sous-systèmes obéissant à une méthode de traitement des données informatiques garantissant :
- la création d'une multitude de documents différents : les formulaires, fichiers structurés,
- la vérification des caractères sensibles discriminants : les attributs de confiance, règles, procédures,
- la commutation des informations de gestion : les échanges en partie double,
- la conservation symétrique des preuves : bilatéralité des originaux archivés et
- la distribution des services demandés : copies, partage des données.

Dans le cas de mise en oeuvre d'une architecture centrée sur un serveur de la toile (en anglais « web-centric ») avec des fonctions légales délocalisées, l'unicité de la plate-forme est assurée par deux agents agissant dans le même centre de données (en anglais « Data Center ») de manière à ne prendre aucun risque opérationnel sur le transfert d'informations.

L'enregistrement des identités numériques et des règles de gestion par personne ou par entreprise est « web-centric » ou supra-nationale, au même titre que la composition de documents et la commutation de messages nécessaires à la gestion.

Par contre, sur le plan légal ou contractuel, l'original électronique se référant aux dispositions juridiques nationales, et la copie papier imprimée à proximité du destinataire, se conforment à des « mesures » d'archivage et des contingences matérielles locales, ce qui justifie un réseau de correspondances transfrontalières spécialisé.

Seules certaines fonctions de confiance peuvent être délocalisées sur un réseau de correspondants sécurisés sans interférer sur les modules opérationnels délocalisés. Ce sont notamment des fonctions liées à l'horodatage et à la certification des identités numériques se référant aux listes de révocation nationales.

Préférentiellement, la symétrie des preuves d'archivage et la commutation des messages en partie double, c'est-à-dire en réalisant deux documents sur la base du document original, sont appliquées et garantissent l'authenticité de tous les documents originaux.

Pour la combinaison des fonctions de dématérialisation réparties sur deux agents hébergés dans le même Data Center, l'un des agents est affecté au réseau tiers de confiance, dit « RTC ». Le principe de neutralité du tiers de confiance veut qu'il dispose des attributs de confiance des personnes agissant sans faire lui-même leurs opérations documentaires à valeur juridique probante qui sont confiées au second agent. Ce premier agent « RTC » est avant tout un bureau d'enregistrement dépositaire des attributs de confiance intervenant dans les courriers ou dans les transactions dématérialisées. C'est aussi ce premier agent qui suit les listes de révocation des certificats d'identité numérique, ainsi que les marques de temps (horodatage par les horloges atomiques).

Sur chaque processus de dématérialisation, et dans la séquence des missions réalisées par l'agent prestataire des services, il communique les attributs de confiance qui rentrent dans la configuration des opérations : composition, conservation-archivage, communication et ampliation.

En fonction des anomalies remontées dans ces circonstances par l'agent prestataire de services, le premier agent peut modifier la notation de l'identité numérique ou réviser l'état de certaines procédures douteuses en vigueur (régulation systémique).

Le second agent est affecté aux missions de confiance. Il gère le processus de dématérialisation de bout en bout :
- la composition des fichiers structurés,
- l'archivage des documents et des preuves d'échanges,
- la commutation de messages ou d'images PDF et
- la production de copies par tous les moyens.

Entre ces quatre modules, qui participent à la dématérialisation des documents et des transactions électroniques, il existe une piste d'audit avec des contrôles de confiance et de conformité, et des relevés d'anomalies.

Toutes ces mentions sont listées pour préserver la traçabilité de chaque « original » entre ces modules et avec les correspondants locaux sollicités.

Le procédé de dématérialisation ainsi décrit garantit efficacement que les trois dimensions du document juridique fondé sur un contenu structuré papier (écrit ou imprimé), des procédures d'échanges organisées et la signature manuscrite des parties, sont fidèlement transposées dans une version électronique à valeur juridique probante.

Les trois dimensions électroniques à valeur juridique probante sont réunies ainsi :
- les personnes, par l'authentification forte électronique,
- le document, par la certification du fichier structuré et
- les procédures, par traçabilité, signature et archivage.

Pour chaque utilisateur, la dématérialisation s'opère simplement grâce à un « bureau privé de correspondance » mis à sa disposition par le réseau de tiers de confiance.

Chaque utilisateur est titulaire, pour la dématérialisation, des documents envoyés ou reçus d'un compte courant de correspondance pour la commutation de messages, et d'un coffre fort électronique pour l'archivage juridique des preuves de correspondance.

En confiant à son tiers de confiance, à travers un réseau de communication sécurisée, ses attributs de confiance, chaque utilisateur peut déléguer des pouvoirs sur l'ensemble des tâches de correspondance concernant la composition des documents, leur transmission, leur conservation et l'ampliation.

L'originalité de cette architecture fonctionnelle permet également une « gestion mobile et collaborative » des documents dématérialisés en individualisant avec les procédures internes et les signatures électroniques toutes les tâches de correspondance dématérialisée.

Les tâches de correspondance sont effectuées en toute sécurité quel que soit le pays et ses contraintes réglementaires.

On observe qu'il existe une réelle interopérabilité juridique et fonctionnelle dans la dématérialisation des documents car la traçabilité peut être contrôlée de bout en bout, et l'archivage légal des preuves électroniques peut être délocalisé en fonction des mesures d'authentification et de conservation en vigueur sur le plan national.

La dématérialisation est organisée sur deux structures indépendantes :
- un système de confiance dans les conventions d'échanges (systèmes de mesure et de transmission) et
- un système de gestion des documents (création et services).

Le système de confiance est fondé sur une technologie d'enregistrement des identités numériques, des attributs personnels, des listes de révocation, et des marques de temps.

Le système de gestion comprend quatre modules opérationnels qui embarquent « les codes génériques » , c'est à dire les identités numériques et les attributs de confiance des parties prenantes à la transaction, que ce soit un courrier-fichier simple, ou un contrat-fichier structuré.

La dématérialisation est effectuée, sur un plan opérationnel, par un prestataire de services répartis en quatre modules : composition des documents, conservation des originaux, commutation de messages, et ampliation des preuves.

La gestion des documents exploite chaque module opérationnel en récapitulant toutes les tâches effectuées avec les attributs de confiance correspondants sur une piste d'audit.

Cette « traçabilité » permet de contrôler systématiquement par une « liste » exhaustive les procédures internes, les règles externes et les mesures de légalité et de confiance.

La « chaîne de sécurité et de confiance » existe ainsi par construction grâce à la combinaison des modules/tâches/attributs de confiance récapitulés sur chaque « liste » séquentielle, horodatée, déposée en coffre fort électronique, et séquestrée chez un huissier.

En ce qui concerne l'adhésion d'un utilisateur invité par un autre utilisateur, adhérent inscrit au réseau tiers de confiance R.T.C., celui-ci confie au tiers de confiance son « fichier partenaires » ou « fichier de correspondants », c'est-à-dire son le carnet d'adresses.

Le tiers de confiance est mandaté par l'adhérent pour envoyer des invitations d'ouverture d'un « compte courant de correspondance » à toutes ses contreparties dans son carnet d'adresses.

Cette proposition adressée au destinataire, ou invité, concerne l'usage d'un « bureau privé de correspondance », gratuit pour le « courrier entrant ». Les invitations sont envoyées :
- soit par courrier électronique (« e-mail ») sécurisé (si le carnet d'adresses l'indique),
- soit par courrier postal via « Posteasy » (marque déposée) : lettre simple avec un prospectus,
- soit par message court SMS (si le carnet d'adresses indique le numéro mobile),
- soit par une combinaison des trois.

Si cette proposition convient au destinataire, il est invité à se connecter sur l'interface d'enregistrement et d'ouverture du compte courant de correspondance : l'URL est indiquée pour se connecter.

Naturellement, en acceptant l'invitation et « son » bureau de correspondance, le destinataire d'une première lettre recommandée avec accusé de réception toute électronique peut instantanément lire son courrier et le télécharger.

L'invitation est nominative. Elle contient un numéro d'invitation. Elle indique le nom de l'utilisateur invitant. La proposition d'ouverture du « compte courant de correspondance » comprend :
A. des services gratuits :
   - un « bureau privé de correspondance » pour réceptionner du courrier ou des documents sécurisés :
      - avec la notification instantanée des « remises » via e-mail ou SMS,
      - avec la fonction d'accusé de réception à valeur juridique probante,
      - avec la fonction de téléchargement PDF Image ou XML Pivot et
      - avec la piste d'audit pour chaque correspondance-courrier certifiée.
   - un « espace d'archivage » des « documents entrants » conservés en Data Center (durée maximum gratuite 2 ans glissants)
B. des services payants :
   - envoi de courriers ou documents sortants,
   - archivage légal courriers ou documents sortants (3 ans),
   - partage des dossiers en « mode collaboratif » dans un « Data Center »,
   - gestion d'« e-mails » sécurisés et enregistrés en Data Center, ensuite horodatés et séquestrés chez un huissier de justice.

Si l'invitation lui convient, l'invité s'inscrit en deux temps.

Au cours d'une phase de pré-inscription, l'invité décline son identité sur le formulaire de pré-inscription :
- nom, prénom,
- adresse physique/postale et
- adresse téléphoniques : téléphone fixe, télécopie, télécopie électronique, mobile.

Ensuite, le formulaire lui demande d'approuver les conditions générales de services (aussi nommées par leur acronyme « CGS ») : on décrit les « prestations-modèles » de courrier dont le tiers de correspondance assure la transmission sécurisée à valeur juridique probante :
- lettres simples ou documents hybrides,
- lettres ou documents recommandés hybrides et
- lettres ou documents recommandés dématérialisés.

On lui demande ensuite de choisir un nom d'utilisateur (« Login ») personnel pour accéder à son bureau de correspondance et à son compte courant de correspondance. On précise à l'invité qu'il reçoit aussitôt un « mot de passe » par le moyen de communication de son choix :
- par mobile,
- par télécopie ou
- par pli postal scellé.

Puis, au cours d'une phase d'inscription, quand il est muni de son « mot de passe », le titulaire peut terminer l'inscription à son bureau privé et à son compte courant de correspondance. On observe qu'il existe, sur ce bureau, des fonctions de gestion gratuites en options. Par exemple, ce bureau donne accès à une rubrique destinée à l'enregistrement des utilisateurs par le titulaire du compte de correspondance. Un accès à l'historique du compte courant de correspondance permet aussi de suivre tous les mouvements de courrier avec leurs statuts d'envoi ou de réception. Si la première session, de pré-inscription a été interrompue, l'invité doit se reconnecter avec son nom d'utilisateur et son mot de passe. Il complète, si nécessaire, l'état civil en donnant l'identité exacte de l'administrateur du compte courant de correspondance (c'est le titulaire).

L'administrateur précise pour les opérations de réception concernant chaque prestation modèle (types de courrier) les personnes habilitées (les fondés de pouvoir) : nom, prénom, adresse, mobile, e-mail, télécopie. L'administrateur précise, pour chaque personne désignée les opérations autorisées, par exemple parmi l'émission de documents en lettre recommandée avec accusé de réception, la lecture de documents, le téléchargement de documents et la consultation historique.

L'administrateur attribue, à chaque fondé de pouvoir, un nom d'utilisateur et un mot de passe personnel et se charge d'informer ces personnes de ces données d'accès personnelles.

En variante, le bureau d'enregistrement peut transmettre séparément le nom d'utilisateur, avec les habilitations, par courrier sécurisé postal, et par ailleurs, un mot de passe, par exemple sur le mobile personnel du destinataire, sous forme de minimessage.

L'administrateur précise éventuellement, pour les opérations payantes, les personnes habilitées : nom, prénom, adresse, mobile, e-mail, télécopie (même procédure d'habilitation et d'information sécurisée).

Les opérations payantes sur les prestations modèles (par exemple, les types de courrier) concernent la composition/validation des documents, l'expédition par tous les moyens, et l'archivage fidèle et durable.

Le titulaire du bureau et du compte de correspondance sécurisée choisit également l'un des moyens de paiement mis à sa disposition.

L'administrateur coche sur l'onglet « signature personnelle » pour se faire délivrer un code secret :
- soit par minimessage,
- soit par télécopie,
- soit par courrier postal.

On observe que le code secret est une authentification forte pour l'accusé de réception effectué par le destinataire vis à vis de son tiers de correspondance qui dispose de sa procuration pour chiffrer, horodater et archiver légalement ce récépissé.

Pour terminer l'inscription, il est proposé au titulaire de consulter le contrat d'adhésion au réseau tiers de confiance, réseau qui fixe les règles d'échanges de courrier ou de documents électroniques à valeur juridique probante.

Pour valider son contrat d'adhérent au réseau tiers de confiance, il suffit qu'il active son code secret sur l'interface pour signer son bulletin d'adhésion.

L'inscription se termine. Une copie conforme du contrat d'adhésion mentionnant le numéro d'adhérent et le numéro de compte courant de correspondance est envoyée en lettre recommandée avec accusé de réception à l'adresse postale déclarée.

Le tiers de confiance agissant en tant que bureau d'enregistrement confirmera l'identité numérique si :
- l'accusé de réception est retourné signé via la Poste et
- la copie conforme papier (LRAR) est retournée signée par l'adhérent avec les justificatifs d'identité nationale ou d'état civil demandés, eux aussi signés à la main « certifiés conformes ».

Le tiers de confiance délivre, en fonction de la qualité de l'enregistrement obtenu, un certificat d'adhésion avec une notation d'identité numérique (IN) de 1 à 3+.

L'interface d'inscription dans son bureau de correspondance précise que si l'adhérent a obtenu une notation pour son identité numérique égale ou supérieure à 3, il peut demander, en plus, un « certificat de signature électronique adhérent » gratuit, ou bien un « certificat de signature qualifiée » payant car délivré par une autorité de certification publique.

En ce qui concerne la confirmation de l'inscription, l'invitant est instantanément informé de son inscription. Son carnet d'adresses est complété avec le numéro d'adhérent de l'invité. Il a connaissance de la notation d'identité numérique de sa contrepartie. Si les frais d'inscription sont à sa charge, ils sont débités sur son compte financier de correspondance.

Le destinataire d'une lettre recommandée toute électronique, appelé LRAR, ou d'une lettre suivie, reçoit une notification lui expliquant qu'il peut accuser réception et lire son document instantanément en s'inscrivant de suite.

Dès que son inscription est terminée, il remplit l'« accusé de réception » figurant sur l'interface de son bureau :
- il coche le numéro de document à ouvrir et
- il inscrit son code secret.

Aussitôt le document s'ouvre et il peut prendre connaissance de son contenu.

Le tiers de correspondance archive dans un coffre fort électronique le document recommandé avec son accusé de réception chiffré et horodaté.

Si le destinataire n'a pas répondu à la notification de remise de courrier LRAR numérique, accompagnée d'une invitation personnelle, le document est automatiquement traité en courrier hybride avec une trace légale papier acheminée par la poste dès lors que le délai de réponse excède deux à trois jours.

La convention entre les parties (expéditeur/fournisseur et destinataire/client) prévoit de remplir les mentions suivantes :
A. L'identité des parties :
   - personne morale : statuts, imprimé Kbis, administrateur désigné, fondé de pouvoir, personnel habilité, adresses (courrier / facturation), coordonnées (téléphone, télécopie, mobiles),
   - qualification des parties :
      - pour le courrier (émetteur et destinataire réciproquement),
      - pour la facture (fournisseur, client) et
      - pour les autres contrats (préciser).
   - autres informations :
      - procuration : désigner la personne et sa fonction
B. La nature des Echanges :
   - modèles de courrier : fichiers (structurés ou non),
   - modèles de facturation : fichier (structuré ou non) et
   - modèles de contrats : fichiers (structuré ou non).
C. La nature de la signature :
   - signature à l'émission :
      - courrier,
      - facture et
      - autres contrats.
   - signature à la réception :
      - courrier,
      - facture et
      - autres contrats.
D. Le choix des prestataires de « services de confiance » : options de chaque partie.

Pour la dématérialisation « par excellence », celle qui est reconnue par la meilleure notation délivrée par un cabinet d'audit et d'expertise indépendante (système d'évaluation métrique), il est indispensable que les trois systèmes de composition numérique, de communication électronique, et d'archivage légal soient intégrés chez le même tiers de confiance et dans le même Data Center.

Le risque opérationnel et systémique est quasi nul dans ces conditions puisque la moindre erreur est corrigée par la plate-forme alors qu'entre plusieurs prestataires, l'analyse de l'erreur et le risque de litige diffère la solution de plusieurs heures ou journées entre les parties.

En ce qui concerne la désignation des tiers de confiance, leurs mandats sont choisis par les parties avec leurs « objets » de gestion à distance.

La dématérialisation des documents recommandés ou suivis est généralement opérée par un tiers de confiance neutre (conformément aux réglementations en vigueur) de manière à établir :
- la valeur probante du document,
- l'accusé de réception et
- l'archivage légal des preuves.

Dans cette mission, le tiers de confiance intervient dans la correspondance entre les parties prenantes en trois phases :
A. La composition et/ou validation du document
   - authentification de l'émetteur et contrôle d'intégrité,
   - vérification du document ou du fichier structuré,
   - composition de l'original immatriculé et
   - validation et signature personnelle.
B. La transmission et réception du message
   - certification de messages signés,
   - commutation de messages (bilatéralité),
   - communications électroniques (notification, téléchargement) et
   - horodatage des messages enregistrés.
C. La conservation et la restitution des preuves
   - contrôle de légalité et de conformité,
   - dépôt légal en coffre fort électronique,
   - suivi d'activité et attestation de preuves et
   - séquestre Huissier de Justice et restitution.

L'émetteur transmet au tiers de confiance soit un « document signé » soit un « fichier structuré » de données. Dans les deux cas, le tiers de confiance vérifie la conformité et signale toutes anomalies.

L'original du document est assorti d'un matricule ou d'un code barre avant d'être signé pour transmission au destinataire.

Le destinataire est notifié, par minimessage, télécopie, télécopie électronique, ou e-Mail pour consulter le document sur son « compte courant » de correspondance sécurisée.

Le document recommandé dématérialisé est conservé en dépôt légal dans deux coffres forts électroniques (« C.F.E. ») pour assurer un archivage fidèle et durable.

Le document recommandé est ensuite transmis par commutation de message aux deux comptes courants de correspondance sécurisée.

Le « document recommandé », reçu par le destinataire, est subordonné, pour sa lecture, à la signature préalable d'un bordereau d'« accusé de réception ». Ce bordereau dématérialisé confirme la réception avec les références du pli déposé (matricule, numéro d'enregistrement en compte courant de correspondance et numéro de dépôt légal en coffre fort électronique).

En revanche, le « document suivi » fait seulement l'objet d'une notification et d'une remise en compte courant de correspondance et sa lecture requiert une authentification avec la « signature personnelle » du destinataire disposant de l'habilitation nécessaire.

Pour la transmission des documents, l'expéditeur et le destinataire doivent être adhérents au réseau de correspondance sécurisée R.C.S..

Si destinataire n'est pas enregistré, il reçoit une invitation l'informant de la remise d'un document recommandé, et précisant la gratuité des « services de réception ».

Les signatures électroniques dont la notation est de niveau 3 sont généralement destinées à l'expédition et à l'accusé de réception (notion de parapheur électronique).

Dans des modes de réalisation particuliers, on met en oeuvre une signature électronique adhérent (« SEA ») avec un certificat privé et réservé aux échanges dans le réseau de correspondance sécurisé (fichier « Partenaires »).

On propose ou reconnaît aussi l'existence d'une signature électronique qualifiée (SEA) qui est destinée à tous les échanges dans le domaine public et dans le réseau d'utilisateurs adhérents.

Un adhérent peut soit utiliser une signature préexistante employée pour d'autres applications personnelles (déclarations fiscales par ex.), soit se faire octroyer une signature qualifiée émise par une autorité de certification à qui le dispositif objet de la présente invention a transmis le dossier d'enregistrement si la notation est « 3+ ».

Le RTC assure l'archivage légal et la restitution des documents dématérialisés sur les durées choisies par les adhérents (1 à 10 ans).

La différence entre le document recommandé et le document suivi existe au niveau de la notification et de l'accusé de réception :
- pour le « recommandé », la notification comporte le numéro du dépôt légal en coffre fort électronique et le numéro d'enregistrement dans le compte courant de correspondance. Le destinataire authentifié et, figurant sur le fichier partenaires de son correspondant, doit remplir le formulaire dématérialisé de l'« accusé de réception » en indiquant le numéro du dépôt légal inscrit sur la notification, et en utilisant au choix sa signature personnelle (« SEP »), adhérent (« SEA ») ou qualifiée (« SEQ »). Le document recommandé ne peut être lu sans avoir rempli le bordereau dématérialisé « accusé de réception ».
- la notification du « document suivi » ne possède qu'un numéro d'enregistrement.

On décrit, ci-après, les procédures de dématérialisation pour les documents de correspondance à valeur probante, lettre suivie (« LS ») ou lettre recommandée (« LR »).

La « correspondance organisée » repose sur deux principes : la conformité et la légalité du courrier électronique, d'une part, et l'adhésion préalable à une convention ou un réseau de correspondance sécurisée (« R.C.S »). On peut se référer au modèle de contrat d'adhésion. Comme exposé plus haut, les modalités d'enregistrement au réseau de correspondance sécurisée envisagent soit la candidature spontanée, soit la procédure d'invitation.

En ce qui concerne la conformité et la légalité du courrier électronique à valeur probante, ces notions s'appliquent sur le fichier structuré ou non structuré à partir duquel est composé le document courrier électronique préparé par l'expéditeur, ou émetteur.

La correspondance de courrier concerne des lettres suivies (« LS ») ou des lettres recommandées (« LR »). Ces lettres peuvent être préparées soit sur le poste de travail de l'utilisateur, soit directement sur la plate-forme du tiers de confiance de correspondance, c'est à dire préparées dans un Data Center sur des modèles mis à la disposition des utilisateurs.

Ces lettres sont créées soit en « texte libre », ce qu'on a l'habitude de qualifier de « fichier non structuré », soit, au contraire, ces lettres sont créées en « fichier structuré ». L'intérêt du fichier structuré, c'est qu'il respecte un formulaire contenant les données nécessaires qui sont situées avec des balises dans des champs particuliers ; certaines de ces données sont des mentions obligatoires telles que la dénomination sociale ou l'adresse du destinataire, et tous ces champs font l'objet de contrôles de cohérence. L'autre intérêt du fichier structuré, c'est de subordonner la création, la publication, la transmission, et l'archivage du document à des vérifications de conformité ou de légalité qui sont confiées au tiers de confiance dans l'intérêt des deux parties prenantes à la correspondance.

Toutes ces contraintes sont naturellement répertoriées dans la convention d'échanges signée par les deux parties avant de commencer leur « correspondance organisée ».

Le « fichier structuré » peut être créé et validé sur le poste de travail de l'expéditeur avant l'expédition du document confiée au tiers de confiance de correspondance.

Dans l'autre hypothèse, les données sont préparées sur le poste de travail et communiquées au tiers de confiance qui les fusionne sur le modèle de document déposé chez lui. Dans ce cas, l'expéditeur prévenu de la composition effectuée par le tiers de confiance, peut valider à distance l'original du document avant son expédition à l'adresse du destinataire par les moyens de transmission choisis. Dans ce cas précis, le tiers de confiance qui est dépositaire du formulaire et qui reçoit les données pour composer le document original, vérifie que les mentions obligatoires sont bien remplies avant de proposer l'expédition du document à la signature de l'émetteur.

La convention de correspondance signée par chacune des parties, indépendamment l'une de l'autre, les fait adhérer au réseau de correspondance sécurisé (« R.C.S »). Ils sont à ce titre membres adhérents au réseau de correspondance sécurisé « RCS ». A cette occasion, le contrat de prestations de services entre l'expéditeur et son tiers de confiance, indique précisément si chaque adhérent utilise pour le courrier sortant (envoi de documents dématérialisés) des formulaires structurés avec des mentions obligatoires, et si le prestataire de services est responsable de la composition des documents originaux, ou seulement responsable du contrôle de leur légalité ou de leur conformité.

Généralement, la lettre est un courrier fondé sur un fichier non structuré. Mais la plupart des grandes entreprises s'organisent actuellement en fonction des règles métiers, des contraintes réglementaires, et des nouvelles dispositions des lois sur la sécurité financière, pour échanger avec leurs partenaires ou leurs contreparties régulières des formulaires intégrant des fichiers structurés et des contrôles.

La composition et/ou la vérification de ces formulaires sont confiées à un tiers de confiance de correspondance qui garantit ainsi la légalité et ou la conformité des documents pour les deux parties.

Pour les fichiers structurés, soit la composition est faite par l'émetteur et, dans ce cas, le tiers de confiance de correspondance limite sa prestation à vérifier l'existence des mentions obligatoires, soit le tiers de confiance intervient comme prestataire de composition du document et, dans ce cas, il fait la fusion des données reçues de l'émetteur sur le formulaire électronique dont il est dépositaire ; le résultat de sa composition est d'abord vérifié par le tiers de confiance et ensuite validé par l'émetteur afin d'effectuer l'expédition du document par tous les moyens et l'archivage des preuves de cette correspondance.

La notion de contrôle de sécurité est relative à l'identification à distance des parties et à l'intégrité des données communiquées.

En plus des examens (mentions obligatoires, fichier partenaires, adresses ou destinations finales du document ) à faire sur la nature même du fichier informatique à partir duquel le document original est établi, le tiers de confiance doit « contrôler à distance » l'identité de l'émetteur en authentifiant sa signature électronique. Il doit aussi vérifier l'intégrité de son message. Il doit enfin authentifier le destinataire et vérifier s'il a bien signé un accord préalable de correspondance électronique sécurisée avec sa contrepartie via le réseau RCS (adhésion au réseau de correspondance sécurisée).

La remise du courrier dématérialisé au destinataire suppose en effet que les deux parties aient déjà défini et convenu à l'avance des modalités de "réception" des documents électroniques : la « boite aux lettres » électronique hébergée et gardée par un tiers de confiance dans son « Data Center » est la meilleure solution et sécurité. Sans « boite aux lettres » hébergée et sécurisée par un tiers de confiance, la preuve de réception ne peut être établie facilement et ni instantanément. Et les éventuelles anomalies de correspondance ne peuvent être décelées, notifiées, et corrigées efficacement.

La dématérialisation des documents repose par définition sur la réduction des risques de litige et de recours devant les tribunaux ; la contestation même de la validité d'un document et d'une correspondance dématérialisée ruine la chaîne de confiance et son prestataire.

La dématérialisation s'organise préventivement en s'assurant que tout le processus de gestion et de signature ne « contient » aucun trou de sécurité. En cas de dysfonctionnement, il est aussi prévu un système de détection des anomalies, et pour chacune d'entre elles, il est prévu un dispositif de correction instantané qui est mis en oeuvre dans le même « Data Center ». Autrement dit le dispositif de correction n'est assujetti à aucune autorité externe afin d'éviter les suspens et les délais incompatibles avec la sécurité qui doit protéger l'enchaînement des transactions électroniques.

Le contrôle de sécurité et de légalité touche donc non seulement le contenu du message avec ses mentions obligatoires, mais aussi le contenant. Le contrôle porte aussi sur l'enveloppe de correspondance électronique à partir de laquelle le tiers de confiance va authentifier l'identité de l'émetteur, qui envoie, et du destinataire, qui reçoit ou accuse réception.

L'adresse électronique sécurisée pour recevoir le courrier ou pour accuser réception doit bien être une adresse officielle, c'est à dire une adresse vérifiée et enregistrée par un tiers de confiance neutre. Chaque adresse est enregistrée dans le contrat d'adhésion pour l'émetteur et déclarée pour le destinataire dans le fichier partenaires qui initie par des invitations l'enregistrement des contreparties déclarées.

Le fichier partenaires est conservé par le tiers de confiance neutre tel que le précise la réglementation en vigueur.

Sans ce contrôle de légalité touchant l'identité des personnes, leur adresse de correspondance, leur signature et le contenu structuré de leurs messages (document courrier et document avis de réception ou coupon réponse), la valeur probante de chaque document électronique ne peut être établie sûrement et l'archivage sans contrôle de légalité expose les parties à des contestations le jour de sa restitution.

L'adhésion préalable au réseau de correspondance sécurisée « R.C.S. » suppose la mise en place d'une convention de correspondance à valeur probante. En effet, la correspondance de lettres ou de courrier hybrides (papier et « .pdf » image), et de documents totalement "dématérialisés" repose sur le principe d'une « convention de correspondance ».

La convention d'échanges organisés est basée sur la nécessité d'obtenir, de prime abord, l'adhésion des contreparties ou de ses correspondants réguliers ou professionnels. Cette adhésion aux règles d'échanges et de correspondance sécurisée se réfère souvent à une norme communautaire (EDI, XML, ...) et aux pratiques établies par le tiers de confiance de correspondance.

Il est ainsi établi que la correspondance de courrier à valeur probante se fonde sur la nécessité de faire figurer chaque contrepartie ou destinataire sur son « fichier partenaires » et d'obtenir son consentement sur les règles d'échanges établies. Ces dispositions sont prioritaires avant de commencer tout mouvement de correspondance.

Toute personne morale ou physique qui adresse un courrier à une contrepartie nouvelle, c'est à dire à une personne n'ayant pas encore souscrit au contrat d'adhésion (réseau de correspondance sécurisé), a généralement recours aux services de confiance de son tiers de correspondance pour soumettre ou proposer au « nouveau destinataire » ce contrat d'adhésion.

De cette façon, les deux parties acceptent des règles d'échanges identiques ou symétriques chez le même tiers de confiance.

Les deux parties bénéficient des mêmes droits et avantages pour administrer les preuves de correspondance électronique : chaque preuve constatée par le tiers de confiance de correspondance est établie et conservée de manière symétrique et bilatérale. Et la preuve ainsi enregistrée est horodatée et séquestrée chez un huissier de justice pour être opposable aux tiers.

Le contrôle de légalité sur le fichier de correspondance et le contrat d'adhésion entre les parties prenantes à un courrier électronique sont des éléments fondamentaux pour établir la valeur probante d'un document « dématérialisé », c'est à dire sans recours à des « preuves matérielles ».

Pour faciliter les contrôles de légalité et d'adhésion mutuelle, le recours au tiers de confiance de correspondance est pratique car il est organisé pour effectuer ces démarches et ces vérifications dans l'intérêt des deux parties.

Vis à vis des compagnies d'assurances, ce modèle de sécurité et de réduction des risques opérationnels est de nature à limiter les primes de risques.

Dans la mesure où les droits des personnes, leurs signatures et les structures de fichiers peuvent évoluer à tout moment, le recours au tiers de confiance est pratique car il s'engage à « maîtriser » ces évolutions.

Le cahier de procédures pour les documents électroniques à valeur probante (lettres suivies ou recommandées) traite successivement chacune des contraintes de la dématérialisation dans l'ordre des facteurs mis en oeuvre pour garantir la légalité et la sécurité sur toute la « chaîne de correspondance » :
- préparation-composition : identification et fichier structuré,
- transmission-réception : certification et identification et
- archivage-restitution : validation et conservation.

Le contrat d'adhésion à la convention de « correspondance dématérialisée » comporte :
- l'inscription personnelle,
- l'identification,
- les attributs personnels,
- la composition des documents,
- les modèles de correspondance,
- la signature électronique,
- le fichier partenaires,
- les prestations de services sécurisés (tiers de confiance, tiers de correspondance, tiers d'archivage) et
- l'invitation des partenaires.

En ce qui concerne la procédure de correspondance dématérialisée, elle comporte :
- l'émission initiale,
- l'originel : création du document,
- le dépôt légal, l'archivage : coffre-fort électronique (« CFE »),
- la commutation de message : deux comptes courants correspondances (« CCC »),
- la notification au destinataire,
- l'accusé de réception (« AR »),
- l'originel de l'accusé de réception,
- l'archivage de l'accusé de réception,
- la remise de l'accusé de réception en compte courant de correspondance,
- l'information à l'expéditeur,
- la consultation, téléchargement,
- la procédure d'échec : alternative document hybride,
- les types de courrier : document recommandé ou suivi et
- l'appariement : dossier recommandé électronique.

Chaque personne morale ou physique s'inscrit au réseau de correspondance sécurisé « R.C.S. », avec son état civil, ses coordonnées téléphoniques et son adresse Internet.

Le tiers de confiance tient l'annuaire de ses adhérents qui sont ainsi dans une communauté fermée et sécurisée.

En ce qui concerne l'Identification à distance, l'inscription et l'enregistrement des identités personnelles intègrent éventuellement celles des utilisateurs ou employés à qui sont confiées certaines fonctions de correspondance.

Les habilitations sont nominatives pour préparer les données, valider le document, transmettre, réceptionner, lire ou consulter, et télécharger.

Les attributs personnels sont les caractères discriminants généralement utilisés pour établir l'état civil et pour qualifier la personne inscrite : identification de la personne morale (« Kbis »), carte d'identité, identifiant bancaire, fiscal ou social sont les justificatifs le plus souvent utilisés.

Mais, pour une entreprise inscrite, c'est aussi la fonction individuelle et sociale qu'il convient de préciser : gérant, mandataire social, administrateur, directeur délégué. Le représentant de la société qui s'inscrit au réseau de correspondance sécurisée « RCS » pour utiliser un compte courant de correspondance, est qualifié d'« administrateur de l'application » et, à ce titre, il peut donner des habilitations pour les fonctions de correspondance. Tous ces caractères, déposés chez le tiers de confiance pour identifier les personnes et les authentifier ensuite à distance, sont dénommés « attributs de confiance ».

Les attributs de confiance sont déposés chez le tiers de confiance pour lui permettre d'identifier la personne à distance à partir de son certificat ou de son code secret. Ces deux « objets » d'identification portent en effet certains attributs pour établir le lien entre les personnes et leurs droits dans l'application de correspondance et de gestion du compte courant de correspondance.

On associe également aux attributs, certains objets personnels de correspondance tels que les formulaires avec leurs procédures de gestion particulières.

En ce qui concerne la composition des documents, si ce sont des données qui sont reçues par le tiers de confiance, cela veut dire que l'adhérent a préalablement décidé avec son prestataire de lui confier la composition du document sur la base d'un fichier structuré dont le modèle a déjà été déposé chez lui.

En tout état de cause, le tiers de confiance effectue le contrôle de légalité et de conformité en vérifiant l'identité de l'émetteur, l'intégrité des données reçues, l'existence du destinataire dans son fichier partenaire (adhérent existant avec des coordonnées sans anomalies) et il vérifie que toutes les mentions obligatoires existent dans le document.

La composition du document consiste à fusionner les données sur le « modèle déposé » correspondant, en y intégrant, éventuellement, un code à barres et la « notation » de chaque partenaire ayant un compte courant de correspondance.

La « notation » d'identité est un indice de sécurité qui indique la valeur ou la qualité de l'enregistrement de chaque personne ou titulaire d'un compte courant de correspondance. La notation de l'identité de chacune des parties permet de prévenir chaque partie des risques éventuels existant sur l'identité de la contrepartie, notamment si la procédure d'enregistrement est en cours ou si le rejet d'un courrier simple ou recommandé postal met en cause l'exactitude du domicile ou de la domiciliation administrative.

Dans la mesure où le tiers de confiance traite des correspondances hybrides et dématérialisés, il peut détecter un certain nombre d'anomalies qui font varier la notation de l'identité personnelle, ce qu'on appelle l'« identité dynamique » (« IDD »).

En ce qui concerne les modèles de correspondance, chaque adhérent peut déposer ses modèles de documents. Ce sont généralement des documents contractuels respectant un formalisme avec des règles métier, des mentions obligatoires ou complémentaires, et des contrôles de cohérence.

Pour chaque formulaire, il est possible pour l'adhérent de désigner les personnes chargées de transférer les données, de valider la composition du document, et d'ordonner sa transmission avec une signature.

Le tiers de confiance peut aussi recevoir des documents « prêts à l'expédition », et dans ce cas son rôle se limitera à vérifier l'existence des identités/matricules/comptes de correspondance des parties prenantes avant d'effectuer l'expédition.

Dans certains cas, si les documents originaux communiqués par l'expéditeur sont destinés à être archivés durablement chez le tiers de confiance « archiveur », ce prestataire s'engage à refaire le contrôle de légalité et les tests de conformité sur la base définie dans la convention de correspondance dématérialisée. De cette manière, on évite d'archiver des documents nuls et non avenus.

Dans d'autres cas, le tiers de confiance agit comme un prestataire de composition de document à part entière, et généralement, il intervient sur un modèle se référant à un fichier structuré dont il est chargé de remplir toutes les mentions obligatoires à partir des données communiquées par l'émetteur.

Les lettres suivies ou recommandées sont généralement des documents ne faisant pas référence à un fichier structuré. Les contraintes légales et contractuelles amènent aujourd'hui les expéditeurs à confier de plus en plus souvent à leur tiers de confiance le soin de structurer leur courrier ou leurs documents dématérialisés pour éviter toute contestation ou litige juridique ultérieurement.

De toutes les manières, les entreprises qui ne se conformeraient pas aux normes de la « dématérialisation » ne pourront pas se prévaloir d'une quelconque conformité au regard des lois de sécurité financière qui leur imposent de démontrer que les risques opérationnels dans le domaine administratif sont bien maîtrisés.

Faute de certification dans ce domaine, les entreprises se rapprochent donc des prestataires tiers de confiance certifiés. (« TAJ », etc...).

En ce qui concerne la signature électronique, chaque adhérent a le choix entre trois signatures pour se faire authentifier à distance et pour assurer l'intégrité du document durablement.

Dans la mesure où le tiers de confiance crée le document dans son « Data Center » sur la base des données transmises en toute sécurité, l'intégrité du document créé dans le « Data Center » n'est pas mise en cause. En effet, le mouvement de transmission se faisant dans le Data Center entre deux comptes courants de correspondance, il n'existe aucun « risque de livraison » (en anglais « delivery risk »).

De plus, comme la « traçabilité » des échanges est organisée sur une base bilatérale (gestion en partie double, c'est-à-dire avec copie du document originel dans le compte courant du destinataire), toute erreur ou dysfonctionnement interne seront immédiatement détectés et seront régularisés rétroactivement sans difficulté. Par contre l'« intégrité du document original » doit être assurée durablement par la conservation en archivage légal se référant à la norme, par exemple les normes AFNOR.

Pour le document créé, transmis et archivé dans le même « Data Center », l'authentification de l'émetteur à partir de sa signature est donc un élément essentiel. A ce titre, dans des modes de réalisation, on met en oeuvre un double dispositif d'authentification pour la signature d'un document.

L'émetteur est authentifié une première fois par son mot de passe pour accéder à son compte courant de correspondance « CCC » ou pour accéder à ce qui lui tient lieu de bureau de correspondance : sur cette interface il peut valider, signer et ordonnancer l'expédition de son document. A ce niveau de signature, il peut activer un deuxième code secret pour s'authentifier et autoriser son tiers de confiance à chiffrer le document électronique avec son certificat de signature qui est qualifié ou sécurisé. L'authentification se trouve ainsi renforcée.

L'authentification avec contrôle d'intégrité par l'intermédiaire d'un téléphone mobile et la signature déportée en salle blanche (signature du tiers de confiance) contribuent à renforcer l'authentification et l'intégrité dans un contexte de mobilité complète.

Les signatures sont, ci-dessous, énumérées dans l'ordre de leur force probante :
Pour la signature électronique personnelle « SEP », l'adhérent dispose d'un code d'authentification personnelle (code « PIN ») et d'un code secret exclusivement réservé à l'exercice de la signature qualifiée qui est utilisée par le tiers de confiance pour signer par procuration et donc pour chiffrer les documents à expédier. De cette manière, l'intégrité du document original est assurée pendant l'archivage légal. La convention d'adhérent prévoit ce service de confiance et précise que toutes ces opérations de signature sont immatriculées, horodatées et confirmées à l'adhérent. Toutes les opérations de signature sont aussi consignées dans un journal de signatures qui est séquestré chaque jour chez un huissier de justice. Chaque « session » de transmission de document dématérialisé fait l'objet d'un rapport de « traçabilité » qui est intégré dans le compte courant de correspondance et « apparié » au document lui-même. Le rapport de « traçabilité » de chaque document original contient toutes les informations d'immatriculation et d'horodatage concernant les actes d'authentification et les actes de chiffrement en précisant chaque fois la nature de la signature électronique utilisée.

Pour la signature électronique adhérent « SEA », le réseau de correspondance sécurisée, distribue aux adhérents qui en font la demande dans leur bulletin d'inscription, un certificat privé de signature électronique exclusivement réservé aux mouvements de correspondance et d'archivage dans le réseau de tiers de confiance, ainsi qu'aux opérations intermédiaires gérées par les partenaires-adhérents. Chaque certificat électronique porte les attributs personnels de l'adhérent ou des personnes déléguées (fondés de pouvoir). Ces attributs ont donc été préalablement enregistrés et validés par le tiers de confiance, à partir de la déclaration d'état civil et de la réception des pièces justificatives certifiées conformes à l'original par le titulaire du compte courant de correspondance. Toutes les opérations faites avec ce « certificat adhérent » sont enregistrées et séquestrées chez l'huissier de justice. La liste de révocation ou de « suspension » d'un certificat est tenue sur un serveur isolé dans le même « Data Center », mais son exploitation a été confiée à un tiers indépendant de manière à ce que dans certaines situations le tiers de confiance ne soit pas juge et partie. Le certificat peut être téléchargé à distance pour être installé par l'utilisateur sur son poste de travail ou sur une clef USB (acronyme de « Universal Serial Bus »). Comme la procédure d'adhésion prend plusieurs jours, le temps de rassembler les pièces du dossier, le certificat adhérent ne peut être délivré au jour de l'inscription, mais seulement après la date de délivrance de l'attestation d'adhésion. Pour cette raison, si l'inscrit ne possède pas déjà un certificat public qualifié tel qu'expliqué dans le paragraphe suivant, la personne ne peut signer son inscription électronique qu'avec la première signature dénommée « signature électronique personnelle » (« SEP »).

Pour la signature électronique qualifiée « SEQ », l'adhérent peut acheter et utiliser un certificat de signature électronique qualifié qui est distribué « en vis à vis » par une autorité de certification qui émet des certificats et qui les personnalise en fonction des attributs personnels qui lui ont été remis par la personne elle-même ou par le tiers de confiance délégué qui est un « bureau d'enregistrement. Dans ce cas, l'adhérent devra indiquer dans son bulletin d'adhésion l'existence de ce certificat de manière à prévenir le tiers de confiance des démarches qui l'oblige pour chaque signature opérée à consulter systématiquement la liste de révocation (certificat annulé ou suspendu) publiée par l'autorité de certification.

Le tiers de correspondance est celui qui assure les communications électroniques, et ceci par « commutation de messages » entre les deux comptes courants de correspondance sécurisés, avec des options de routage (délivrance par la poste, e-mail ou télécopie électronique sécurisé). Pour chaque transmission, la certification des échanges et la notification du document au destinataire sont des services rendus par le tiers de correspondance (vérification de la validité des certificats de signature à l'origine de ces échanges).

Le tiers d'archivage assure d'abord le contrôle de légalité du document qui est transmis et ensuite seulement, l'archivage fidèle et durable est effectué avec les preuves de correspondance. Le tiers d'archivage chiffre le document avec sa signature qualifiée pour préserver l'intégrité du document original, et ceci pour le déposer dans le coffre fort électronique de l'adhérent avec un numéro d'ordre et un horodatage. Il sait restituer ensuite chaque document à la demande de son propriétaire.

L'invitation d'un partenaire peut aussi se faire spontanément au moment de la transmission d'un document à une personne non encore identifiée et enregistrée. Elle figure dans le répertoire du « fichier partenaires » chez l'émetteur mais jusqu'à présent aucune procédure d'invitation n'a abouti. Dans ce cas, la procédure d'invitation/adhésion est lancée simultanément, et le destinataire ne pourra prendre connaissance de son document, que lorsque les formalités d'enregistrement seront terminées. Il peut donc se passer quelques jours sans que le document puisse être ouvert dans le compte courant de correspondance réservé à l'usage du destinataire. Si aucune adhésion n'a été enregistrée dans un délai de huit jours, le document électronique est re-matérialisé par le tiers de confiance, mis sous enveloppe, et acheminé par la poste. Mais le destinataire dont on garde la trace du document électronique dans son compte de correspondance temporaire, n'a pas accès à ce compte tant que l'adhésion n'est pas régularisée.

Si le destinataire refuse l'invitation d'adhésion ou ne parvient pas à remplir son dossier dans les délais impartis (deux à huit jours calendaires), le document électronique est re-matérialisé, c'est-à-dire imprimé par le tiers imprimeur et envoyé par la poste. On accompagne le document papier d'une notice explicative sur le fonctionnement du réseau de correspondance sécurisé et sur les avantages du compte courant de correspondance réservé à son usage temporaire.

Si son adhésion est régularisée dans un délai de trente jours, il garde l'avantage de la conservation du premier document électronique envoyé dans son compte courant de correspondance. Au delà d'un mois, si les formalités d'enregistrement ne sont pas terminées, on considère que la procédure a échoué et le compte courant de correspondance temporaire est fermé.

Les services de réception, en lettre suivie ou recommandée toute électronique comportent la gestion des « accusés de réception », la lecture des documents reçus, le téléchargement, et la conservation à court terme, par exemple un an.

Les services d'expédition comportent de nombreuses options qui concernent la composition, la transmission, et l'archivage légal. Le titulaire du compte courant de correspondance indique si le tiers de confiance est choisi comme prestataire de documents structurés ou non. Dans le premier cas, il lui confie donc ses formulaires avec les règles de gestion de ses fichiers structurés (mentions , balises, procédures de validation et signature). Dans le cas contraire, si les documents sont déjà préparés, le tiers de confiance n'a que la charge de la transmission et de la conservation fidèle et durable. Eventuellement, l'expéditeur peut demander au tiers de confiance d'exercer un contrôle de légalité et de conformité avant d'expédier et d'archiver.

La signature électronique personnelle est une signature simplifiée avec un code secret spécifique. La signature procède d'une authentification à partir de la combinaison entre le « login », le mot de passe et le « code secret » réservé au chiffrement du document signé. Le chiffrement du message est confié au tiers de confiance qui utilise son propre « certificat qualifié » pour effectuer cette opération.

Le titulaire du compte de correspondance accepte donc de donner une procuration au tiers de confiance uniquement pour chiffrer ses documents afin que leur intégrité soit assurée dans le Data Center, et pour la durée d'archivage et de restitution demandée. Le code confidentiel mis en oeuvre pour « la signature à distance » est un numéro à six chiffres. Il peut en prendre connaissance de différentes manières :
- son numéro de téléphone mobile GSM (par minimessage SMS),
- son numéro de télécopieur professionnel et
- son adresse postale.

Le code secret transmis pour activer la « signature personnelle » qui n'est pas «signalé» en réception dans un délai limité, devient inopérant. Ce délai dépend du canal de communication utilisé. Par exemple, ce délai est :
- pour le réseau de téléphonie mobile : 5 minutes,
- pour la télécopie : 10 minutes et
- pour le courrier : 3 jours.

Il faut, en cas d'échec, reprendre la procédure au niveau du choix de la signature électronique. Au delà du délai limite, si le bénéficiaire du code secret n'a pas signalé la bonne réception par le canal choisi, l'interface lui indique qu'il doit reprendre la procédure au niveau du choix du média de communication utilisé pour recommencer ma transmission du code secret.

La personne qui oublie son code secret de signature personnelle peut demander la création d'un nouveau code secret pour sa signature personnelle en rappelant l'indicatif de sa pré-inscription du dossier (exemple : 2005.12.18.21.32.Milou)

La seconde signature électronique est le « certificat privé » distribué par le tiers de confiance : signature électronique adhérent (« SEA »). Ce certificat n'est donné que lorsque les formalités d'inscription sont terminées, c'est à dire lorsque le tiers de confiance a reçu le ou les justificatifs-papier de l'inscription en ligne. Ces justificatifs doivent tous être certifiés conformes de la main de l'adhérent. Sa signature sera vérifiée est par comparaison avec l'«accusé de réception» que la poste lui a retourné. En fait, la « signature électronique adhérent » « SEA » peut être donnée au titulaire du compte courant de correspondance dès qu'il a reçu par e-mail son attestation d'adhérent « RCS ».

La troisième signature électronique peut être choisie avec un certificat distribué par une autorité de certification (« AC ») publique. C'est la signature électronique qualifiée (« SEQ »). Soit la personne en dispose déjà sur son poste de travail, soit elle demande au tiers de confiance de lui en procurer une. Cette demande ne peut pas aboutir tant que le contrat d'adhésion et le retour des justificatifs ne sont par formellement validés par l'envoi d'une confirmation du bulletin d'adhésion. Dans ce dernier cas, le dossier d'enregistrement de son état civil « instruit » par le tiers de confiance, sera remis par lui à l'autorité de certification pour qu'elle personnalise le certificat de signature enregistré à son nom.

Si la personne utilise déjà un certificat qualifié sur son poste de travail, elle indiquera le nom de l'autorité de certification de manière à ce que le tiers de confiance de correspondance puisse la consulter systématiquement pour vérifier sur sa « liste de révocation » si le certificat est toujours valide et actif.

Le contrat d'adhésion peut être signé par la première signature appelée « signature électronique personnelle » (« SEP »). Le contrat d'adhésion ne peut pas être signé encore avec la signature électronique adhérent (« SEA ») car elle n'est disponible qu'après avoir obtenu l'« attestation d'adhésion ». Or cette attestation n'est envoyée que si toutes les pièces du dossier sont réunies et validées par le tiers de confiance, ce qui prend un certain délai de courrier. Aucune signature électronique adhérent (« SEA ») ou signature électronique qualifiée ne peut être demandée sans disposer d'une notation de l'identité personnelle et d'adhésion inférieure à la qualification « certifié » (Niveau « 3 »). Dans certaines conditions, le contrat d'adhésion peut être signé par la troisième signature disposant d'un « certificat qualifié », c'est à dire celui qui est fourni par une autorité de certification (« AC ») : c'est uniquement lorsque ce certificat de signature est déjà installé sur le poste de travail de l'utilisateur au moment de l'inscription.

Quand le contrat d'adhésion est finalement signé, il est enregistré dans le compte courant de correspondance du nouvel adhérent, c'est même le premier échange en « courrier entrant » qu'il peut ouvrir ou consulter.

A ce stade, le contrat d'adhésion est enregistré avec la mention ou la notation : adhérent enregistré (« ADE »). C'est le deuxième niveau d'identification à distance (notation niveau « 2 »).

Le premier niveau d'identification reconnu par le tiers de confiance, c'est celui qui correspond à la pré-inscription : seul l'état civil restreint ou limité a été rempli soit par les informations communiquées par la personne invitante (adhérent confirmé), soit rempli par le nouvel adhérent en phase préparatoire.

La phase préparatoire est celle précisant l'état civil avec l'approbation du contrat d'adhésion mais sans mention et choix d'une signature électronique. On qualifie ce niveau de « adhérent déclaré » (« ADD ») : niveau « 1 » qui permet uniquement de retirer des lettres ou documents suivis. Il n'y a pas d'accusé de réception explicite avec une signature électronique mais l'adhérent a accepté le contrat d'adhésion.

Il peut poursuivre ultérieurement la procédure d'adhésion pour relever son niveau ou sa notation d'identification. L'attestation d'adhésion n'est formalisée et signée par le tiers de confiance que si les dernières formalités suivantes sont complètement respectées : L'adhérent est invité à envoyer les justificatifs-papier de son « état civil » : photocopies de l'extrait « KBIS », carte d'identité, Passeport, Relevé d'Identité Bancaire (« RIB ») ou chèque barré. Sur la photocopie de son état civil, on lui demande d'apposer sa signature manuscrite en écrivant « certifié conforme à l'original », et ceci en mentionnant la date.

Dès la réception des documents justificatifs par la poste, le tiers de confiance vérifie que ceux ci sont conformes aux déclarations inscrites dans le contrat d'adhésion électronique. Le tiers de confiance vérifie ensuite que la signature apposée sur le coupon d'« accusé de réception » de la lettre recommandée envoyée par le tiers de confiance est parfaitement identique à celle certifiant la conformité des photocopies de son état civil.

Si cette vérification est positive, le tiers de confiance constitue le dossier électronique de l'adhérant en appariant les documents papiers (justificatifs de l'état civil) qui seront scannés, avec les originaux électroniques existants, à savoir le contrat d'adhésion signé et la lettre recommandée hybride avec son accusé de réception scanné.

Le dossier électronique est archivé dans un coffre fort et toutes les preuves de correspondance sont séquestrées également chez un huissier de justice. A ce stade, le tiers de confiance délivre une attestation d'adhésion dont la mention est la suivante :
- pour un dossier complet sans défaut, « adhérent certifié » « ADC » Niveau « 3 » et
- pour un dossier incomplet, « adhérent enregistré » « ADE » Niveau « 2 ».

Sur un certain nombre de critères propres au tiers de confiance, il est possible d'atteindre une notation maximum Niveau « 4 ». Cette notation est reconnue d'office à l'adhérent qui s'est présenté physiquement dans le bureau d'enregistrement de Posteasy tiers de confiance : c'est l'« enregistrement en vis à vis ».

La qualification pour le niveau « 4 » est : « adhérent certifié plus » ou « ADC+ ». La notation des adhérents figure systématiquement dans chaque document de correspondance pour informer chaque contrepartie (transparence). Il existe, à cet effet, une zone de sécurité dans chaque correspondance qui précise les références des deux signatures utilisées (« SEP », « SEA », « SEQ ») ainsi que la notation actuelle des deux parties adhérentes.

La notation de l'identité est un des aspects de la présente invention. En fonction de la qualité du dossier d'inscription rempli, il est attribué une notation à l'identité du titulaire du compte courant de correspondance. Cette notation permet de repérer facilement d'éventuelles anomalies qui limitent la certification du tiers de confiance ou qui l'amène à certifier avec réserves.

Le téléchargement de la signature adhérent : dès que le contrat d'inscription est validé et confirmé, le tiers de confiance invite l'adhérent à télécharger le certificat de signature (« SEA » ou « SEQ ») qu'il a demandé et qui lui a été réservé. Techniquement, il s'agit d'une simple appliquette (en anglais « applet ») java (marque déposée) compatible avec la plupart des configurations informatiques du marché.

Si certaines informations concernant la situation du partenaire ont changé, le tiers de confiance tient informé l'utilisateur invitant et son fichier partenaire est automatiquement mis à jour.

En principe, la dématérialisation repose sur les services d'un tiers de confiance prestataire de documents, opérateur de communications électroniques sécurisées, et archiveur des preuves de correspondance. Ses services portent :
- sur l'authentification forte des parties prenantes à la correspondance,
- sur le chiffrement ou l'empreinte cryptée du document (« SHA1 » ou « .sig »),
- sur le fichier structuré avec ses mentions obligatoires,
- sur la commutation de message sécurisé et
- sur l'archivage légal des preuves (« 1 » à « 4 »).

L'émetteur envoie son flux de données par FTPS (protocole de communication sécurisé). En tant qu'adhérent, il est connu du tiers de confiance. Il a notamment déposé ou non des formulaires ou fichiers structurés. Il est authentifié par son login et son mot de passe. Si c'est un serveur qui émet le flux de données, il y a souvent un « certificat serveur » niveau 4.

La validation du pli, par l'expéditeur, pour transmission requiert une signature (code secret ou certificat). La signature électronique personnelle « SEP » suffit pour ce genre d'opération. L'authentification de l'émetteur est manifeste et le chiffrement peut être opéré sur la plate-forme en « data center » avec le certificat qualifié du tiers de confiance.

Le tiers de confiance construit alors un fichier compressé (« ZIP ») comportant le document, la signature et la certification. Si l'émetteur n'a pas de certificat numérique, c'est le tiers de confiance qui chiffre par procuration. La signature du tiers de confiance sur la base d'une authentification forte apporte au document validé un chiffrement avec le certificat qualifié du tiers de confiance. Le fichier compressé est déposé au coffre fort électronique des deux parties. Le dépôt légal de l'original du document est horodaté et assorti d'un numéro de dépôt légal (numéro « DL ») d'archivage.

La commutation de message met en oeuvre les comptes courants de correspondance « CCC » symétriques des deux parties. La copie fidèle ou le duplicata du document original est remis en compte courant de correspondance. La base de données pli est renseignée : numéro de pli et numéro de dépôt légal avec l'horodatage.

Le pli format, par exemple au format « PDF » (marque déposée) est mis dans le CCC de l'émetteur et il en est informé immédiatement par notification (e-mail, télécopie électronique ou téléphone mobile). La notification est un message notarisé et donc enregistré sous forme e-mail, télécopie électronique ou message court (« SMS »). L'expéditeur peut ainsi constater que le pli a bien été envoyé.

Le destinataire est avisé, par exemple par e-mail, de la « remise » d'un pli avec son numéro de dépôt légal : en aucun cas il ne peut le lire sans avoir donné son accusé de réception. Il lui est précisé que le document expédié est un pli/document « suivi dématérialisé » (« DSD ») ou un pli/document « recommandé dématérialisé » (« DRD »). L'accusé de réception est un document à part entière. Ce document est soit un « coupon réponse » établi au nom du destinataire, soit un document plus formalisé qui recours à la signature électronique pour renforcer la « non-répudiation ».

Avec le numéro de dépôt, la personne habilitée (destinataire) se connecte sur l'interface. Avec son nom d'utilisateur (« Login ») et son mot de passe, le destinataire accède à son compte courant de correspondance (« CCC »). Pour effectuer le retrait du document recommandé, on lui demande le numéro de dépôt légal (« DL »). Le destinataire utilise sa signature électronique personnelle pour signer l'« accusé de réception ».

Sa signature électronique personnelle comporte un code secret pour renforcer son authentification à distance et pour activer le chiffrement de l'accusé de réception à partir du certificat qualifié de son tiers de confiance (procuration). Si le destinataire a téléchargé un certificat numérique adhérent ou qualifié (distribué par une autorité de certification, il peut directement et globalement signer son accusé de réception en chiffrant lui-même le message. En définitive, la signature électronique chiffre le document « accusé de réception ».

Pour un destinataire qui vient de s'inscrire et qui maîtrise peu l'informatique, on recommande la procédure simplifiée de signature électronique « SE » : en signature personnelle SEP, le destinataire utilise son code secret d'activation. L'activation permet son authentification forte et confie au tiers de confiance le chiffrement de l'accusé de réception (avec un horodatage). Cette procédure simplifiée se compare aux deux autres :
- en signature adhérent, il donne son « certificat privé » et chiffre l'accusé de réception par lui-même,
- en signature qualifiée, il donne son « certificat public» et chiffre l'accusé de réception par lui-même.

Dans toutes les solutions de signature, la validité du certificat employé est vérifiée. Pour ne pas être juge et partie, les serveurs de signatures sont confiés à un tiers indépendant. Le tiers de confiance vérifie que le numéro de dépôt légal du document expédié figurant dans l'accusé de réception est correct. Le tiers de confiance vérifie ensuite pour la signature (« .Sig ») que le certificat utilisé par le destinataire pour accuser réception est bien valide. Si ces deux contrôles sont positifs, le tiers de confiance compose le document original de l'accusé de réception. Il indique dans le journal des signatures pour cet original la nature du certificat utilisé avec un horodatage. Chaque signataire, en activant sa signature électronique reçoit un e-mail de confirmation avec les références du journal de signatures.

Le journal de signature comprend : numéro de pli/document, numéro du dépôt légal/document, numéro du dépôt légal / accusé de réception, les deux numéro adhérents, Les deux références signatures avec leur horodatage. L'original de l'« accusé de réception » est archivé dans le coffre fort électronique.

Suite à l'archivage du coupon ou du bordereau d'accusé de réception, le duplicata ou la copie conforme, par exemple au format «.pdf » est remis en compte courant de correspondance. Les deux parties sont notifiées par courrier électronique ou message court du coupon d'accusé de réception en compte CCC. Les personnes habilitées peuvent ensuite consulter et télécharger l'accusé de réception. Le destinataire peut ensuite lire et télécharger l'original du « document recommandé ». Sur chaque compte courant de correspondance, le document recommandé et l'accusé de réception sont rangés cote à cote (appariement, gestion de dossier électronique).

La traçabilité des opérations est transmise et séquestrée par un huissier de justice en deux phases :
- composition document, archivage, comptes courant de correspondance et
- composition de l'accusé de réception, archivage, comptes courant de correspondance.

Si des anomalies sont repérées par le tiers de confiance au moment de la saisie de l'« Accusé de Réception », celles-ci sont notifiées au destinataire du document recommandé (liste des anomalies, horodatage, séquestre huissier avec horodatage).

Si le destinataire du document recommandé n'a pas rempli son coupon « accusé de réception » dans un délai de deux à huit jours, le tiers de confiance le matérialise, par le biais du tiers imprimeur, par un document papier sous enveloppe et fait transmettre cette enveloppe par voie postale à l'adresse physique du destinataire.

Le document recommandé en hybride consiste à remettre le courrier sous format papier via la poste au destinataire. Le destinataire prend connaissance du document après avoir signé le bordereau papier accusé de réception.

Il peut ensuite consulter la copie conforme ou fidèle dans son compte de correspondance dès lors qu'il indique sur l'interface le numéro du bordereau de l'accusé de réception qu'il a reçu. Sinon, par ordre chronologique, il peut consulter tous ses plis entrants avec les accusés de réception papiers qui ont été récupérées par le tiers de confiance et scannées.

L'appariement permet de constituer un dossier recommandé par rapprochement entre les documents papier et numérique. Dès que le tiers de confiance a récupéré le bordereau d'accusé de réception signé sur le papier par le destinataire, celui-ci lui étant remis par la poste, il peut le scanner et le rapprocher du document électronique envoyé.

Le tiers de confiance scanne aussi le bordereau papier d'accusé de réception, pour mémoriser dans les deux comptes courants de correspondance la signature manuscrite du destinataire et le code barre qui est associé à la lettre recommandée.

En saisissant le numéro de bordereau d'accusé de réception, l'expéditeur et le destinataire peuvent ouvrir les fichiers, par exemple au format « .pdf », du dossier recommandé (le document et l'accusé de réception horodatés par la poste).

La différence entre le document dématérialisé « recommandé » et « suivi » se situe au niveau de l'accusé de réception. Pour le document recommandé, le tiers de confiance fait « composer » par le destinataire un « accusé de réception » qui est un courrier à part entière.

La dématérialisation du coupon réponse respecte donc le formalisme de la dématérialisation. Il existe un format structuré à remplir en ligne en mentionnant le numéro de dépôt légal et en utilisant l'une des trois signatures électroniques. Ce document est archivé légalement en coffre fort électronique avec un horodatage et son propre numéro de dépôt. Et aucune lecture du document recommandée ne peut être faite par le destinataire tant qu'il n'a pas signé l'accusé de réception.

Pour la lettre suivie, il suffit de l'authentification simple du destinataire au moment où il se connecte à son compte pour lui laisser prendre connaissance du courrier. Il n'existe pas de document à remplir pour respecter le formalisme légal de l'accusé de réception propre à la correspondance « recommandée ».

Il existe uniquement un coupon réponse qui est facultatif. La preuve d'accusé de réception est administrée en produisant seulement les informations sur l'horodatage au moment de l'accès par le destinataire à son compte courant de correspondance, de même que l'horodatage relevant l'ouverture du fichier, par exemple au format « .pdf » contenant le document « entrant ».

Toutes les étapes de la procédure d'adhésion sont horodatées :
- soit au niveau des connections/communications avec le tiers de confiance,
- soit aux niveaux de la « composition », de la « commutation » et de l'« archivage ».

Chaque document possède un numéro de pli, un numéro de dépôt légal et un numéro d'accusé de réception. Chaque signature est journalisée sur une piste d'audit appropriée.

Les communications électroniques peuvent être traitées par téléphonie mobile, par télécopie électronique, par la poste (courrier hybride), ou par téléphone (serveur ou call center).

Toutes les opérations figurant dans le schéma de traitement dématérialisé d'une adhésion, ou bien d'une correspondance dématérialisée (lettre simple ou lettre recommandée avec accusé de réception, sont enregistrées et horodatées pour alimenter la piste d'audit générale (« PAG ») séquestrée au jour le jour chez un huissier de justice.

Les mouvements d'enregistrement de message sur les comptes courants de correspondance sont effectués en bilatéral avec un numéro d'ordre. Les mouvements d'archivage dans les coffres forts électroniques sont effectués en bilatéral avec un numéro de dépôt légal. Chaque horodatage est réalisé systématiquement en croisant deux horloges atomiques dont celle de Meudon.

Pour l'horodatage, on utilise le protocole NTP (acronyme de « net time protocol » pour protocole de temps sur Internet) pour se synchroniser à l'horloge atomique de Meudon. Dans le réseau interne, les horloges des serveurs sont elles mêmes en synchronisation avec les horloges des deux passerelles.

Dans le contrat d'adhésion au réseau de correspondance sécurisée chaque partie est prévenue et accepte que le service soit interrompu de minuit moins trente secondes à minuit plus trente secondes pour neutraliser tout effet de bord entre deux dates, la tolérance de synchronisation étant ici considérée égale à trente secondes.

## Revendications

1. Procédé (100) de sécurisation de transfert de données, comprenant :
- Une étape (154, 156) de vérification de l'identité d'au moins un destinataire (144) à qui un émetteur (142) d'un document veut transmettre ledit document,
- une étape de transmission dudit document, sur un réseau informatique, par l'émetteur à au moins un des destinataires dont l'identité a été vérifiée, en mettant en oeuvre au moins une étape de traitement dudit document par des moyens de traitement de document, ladite étape (102, 104, 108, 110) de traitement choisie dans un groupe comprenant une composition, une commutation, un archivage, une ampliation et une communication dudit document ;
ledit procédé étant **caractérisé en ce que** pour toutes les étapes de traitement du document effectuées par les moyens de traitement de document postérieure à l'étape de vérification de l'identité d'au moins un destinataire, une étape (326, 330, 336, 342, 346, 352) de mesure de valeur probante de ladite étape de traitement en fonction des moyens de traitement de document mis en oeuvre,
et **en ce qu'**il comprend en outre :
- une étape (356) d'agrégation des valeurs probantes des étapes de traitement de ladite transmission pour fournir une mesure de valeur probante globale de ladite transmission du document et
- une étape (358) d'association, en mémoire, de ladite valeur probante globale avec un identifiant de ladite transmission dudit document.

2. Procédé selon la revendication 1, **caractérisé en ce que**, au cours de l'étape de mesure, la mesure est fonction de la procédure d'identification de l'émetteur mise en oeuvre par les moyens de traitement de document.

3. Procédé selon l'une quelconque des revendications 1 ou 2, **caractérisé en ce que**, au cours de l'étape de mesure, la mesure est fonction du type de signature électronique effectuée, avec les moyens de traitement de document, par au moins un utilisateur émetteur ou destinataire des données.

4. Procédé selon l'une quelconque des revendications 1 à 3, **caractérisé en ce que**, au cours de l'étape de mesure, la mesure est fonction du type d'archivage des données transmises par les moyens de traitement de document.

5. Procédé selon l'une quelconque des revendications 1 à 4, **caractérisé en ce que**, au cours de l'étape de mesure, la mesure est fonction du résultat d'une lecture automatique par ordinateur effectuée par les moyens de traitement de document.

6. Procédé selon l'une quelconque des revendications 1 à 5, **caractérisé en ce qu'**il comporte une étape de constitution d'un accusé de réception comportant une information représentative de la valeur probante globale de la transmission, ledit accusé de réception étant associé audit document au cours de ladite étape d'association.

7. Procédé selon l'une quelconque des revendications 1 à 6, **caractérisé en ce qu'**il comporte une étape d'affectation d'une valeur probante globale à une transmission de document à venir et une étape de sélection des étapes de traitement à réaliser au cours de cette transmission en fonction de la valeur probante globale que lesdites étapes de traitement permettent conjointement d'atteindre.

8. Système de gestion de correspondances électroniques sécurisées comprenant au moins un serveur d'application assurant au moins un service d'annuaire des utilisateurs dudit système, un service de fourniture aux dits utilisateurs de comptes courants de correspondances, un service d'ordonnancement et un service de suivi de bout en bout de toutes les opérations ordonnancées par le serveur d'application, ledit système comprenant en outre un réseau de transmission desdites correspondances et étant configuré pour mettre en oeuvre un procédé selon l'une des revendications 1 à 7.

9. Système de gestion de correspondances électroniques selon la revendication 8 **caractérisé en ce que** les notes de valeur probante d'une liste déterminée d'opérations réalisées par le serveur d'application, et comprenant au moins une opération ne faisant pas appel au service d'annuaire, sont agrégées dans une note de valeur probante pour chaque correspondance.

## Patentansprüche

1. Verfahren (100) zum Sichern von Datenübertragungen, das Folgendes beinhaltet:
- einen Schritt (154, 156) des Verifizierens der Identität von wenigstens einem Adressaten (144), zu dem ein Sender (142) das Dokument senden will,
- einen Schritt des Sendens des Dokuments, durch den Sender, auf einem Computernetz zu wenigstens einem der Adressaten, dessen Identität verifiziert wurde, durch Ausführen wenigstens eines Schritts des Verarbeitens des Dokuments mit Dokumentverarbeitungsmitteln, wobei der Verarbeitungsschritt (102, 104, 108, 110) ausgewählt wird aus einer Gruppe bestehend aus Erstellen, Schalten, Archivieren, Bestätigen und Übermitteln des Dokuments;
wobei das Verfahren **gekennzeichnet ist durch**, für alle durchgeführten Dokumentbearbeitungsschritte durch die Dokumentverarbeitungsmittel nach dem Schritt des Verifizierens der Identität von wenigstens einem Adressaten, einen Schritt (326, 330, 336, 342, 346, 352) des Messens eines Beweiswertes des Verarbeitungsschrittes in Abhängigkeit von den implementierten Dokumentverarbeitungsmitteln,
und dadurch, dass es ferner Folgendes beinhaltet:
- einen Schritt (356) des Sammelns von Beweiswerten der Schritte des Verarbeitens der Sendung zum Liefern eines Maßes für den Gesamtbeweiswert des Sendens des Dokuments, und
- einen Schritt (358) des Assoziierens, im Speicher, des Gesamtbeweiswertes mit einem Identifikator des Sendens des Dokuments.

2. Verfahren nach Anspruch 1, **dadurch gekennzeichnet, dass** im Laufe des Messschrittes das Messen von dem Vorgang des Identifizierens des Senders abhängig ist, durchgeführt durch die Dokumentverarbeitungsmittel.

3. Verfahren nach Anspruch 1 oder 2, **dadurch gekennzeichnet, dass** im Laufe des Messschritts das Maß vom Typ der elektronischen Signatur abhängig ist, ausgeführt mit den Dokumentverarbeitungsmitteln durch wenigstens einen Daten sendenden oder empfangenden Benutzer.

4. Verfahren nach einem der Ansprüche 1 bis 3, **dadurch gekennzeichnet, dass** im Laufe des Messschritts das Maß vom Archivierungstyp der von den Dokumentverarbeitungsmitteln gesendeten Daten abhängig ist.

5. Verfahren nach einem der Ansprüche 1 bis 4, **dadurch gekennzeichnet, dass** im Laufe des Messschrittes das Maß vom Ergebnis eines automatischen Lesens durch einen Computer abhängig ist, durchgeführt durch die Dokumentverarbeitungsmittel.

6. Verfahren nach einem der Ansprüche 1 bis 5, **dadurch gekennzeichnet, dass** es einen Schritt des Erstellens einer Empfangsquittung beinhaltet, die eine Information umfasst, die den Gesamtbeweiswert der Sendung repräsentiert, wobei die Empfangsquittung mit dem Dokument im Laufe des Assoziationsschritts assoziiert wird.

7. Verfahren nach einem der Ansprüche 1 bis 6, **dadurch gekennzeichnet, dass** es einen Schritt des Zuordnens eines Gesamtbeweiswertes zu einer zukünftigen Dokumentsendung und einen Schritt des Auswählens von Verarbeitungs schritten beinhaltet, die im Laufe dieser Sendung zu realisieren sind, in Abhängigkeit von dem Gesamtbeweiswert, den diese Verarbeitungsschritte gemeinsam erzielen können.

8. System zum Verwalten von gesicherten elektronischen Korrespondenzen, umfassend wenigstens einen Anwendungsserver, der wenigstens einen Verzeichnisservice für Benutzer des Systems, einen Service zum Liefern von laufenden Korrespondenzkonten zu den Benutzern, einen Planungsservice und einen End-to-End-Verfolgungs service aller vom Anwendungserver geplanter Operationen gewährleistet, wobei das System ferner ein Netzwerk zum Senden der Korrespondenzen umfasst und zum Durchführen eines Verfahrens nach einem der Ansprüche 1 bis 7 konfiguriert ist.

9. Verfahren zum Verwalten von elektronischen Korrespondenzen nach Anspruch 8, **dadurch gekennzeichnet, dass** die Beweiswertnoten einer bestimmten Liste von durch den Anwendungsserver realisierten Vorgängen, umfassend wenigstens eine Operation, die sich nicht auf den Verzeichnisservice bezieht, in einer Beweiswertnote für jede Korrespondenz gesammelt werden.

## Claims

1. A method (100) for securing data transfers comprising:
- a step (154, 156) of verifying the identity of at least one addressee (144), to whom a transmitter (142) of a document intends to transmit said document;
- a step of the transmitter transmitting said document over a computer network to at least one of the addressees whose identity has been verified, by implementing at least one step of processing said document by document processing means, said processing step (102, 104, 108, 110) being selected from a group comprising composing, switching, archiving, authenticating and communicating said document;
said method being **characterised in that**, for all the steps of processing the document carried out by the document processing means after the step of verifying the identity of at least one addressee, a step (326, 330, 336, 342, 346, 352) of measuring a probative value of said processing step as a function of the implemented document processing means,
and **in that** it further comprises:
- a step (356) of aggregating the probative values of the steps of processing said transmission in order to provide an overall probative value measurement of said transmission of the document; and
- a step (358) of associating, in a memory, said overall probative value with an identifier of said transmission of said document.

2. The method as claimed in claim 1, **characterised in that**, during the measurement step, the measurement is a function of the procedure for identifying the transmitter implemented by the document processing means.

3. The method as claimed in any one of claims 1 to 2, **characterised in that**, during the measurement step, the measurement is a function of the type of electronic signature implemented, with the document processing means, by at least one user transmitting or receiving data.

4. The method as claimed in any one of claims 1 to 3, **characterised in that**, during the measurement step, the measurement is a function of the type of archiving of the data transmitted by the document processing means.

5. The method as claimed in any one of claims 1 to 4, **characterised in that**, during the measurement step, the measurement is a function of the result of automatic computer reading carried out by the document processing means.

6. The method as claimed in any one of claims 1 to 5, **characterised in that** it comprises a step of compiling an acknowledgement of receipt comprising information representing the overall probative value of the transmission, said acknowledgement of receipt being associated with said document during said association step.

7. The method as claimed in any one of claims 1 to 6, **characterised in that** it comprises a step of assigning an overall probative value to a future document transmission and a step of selecting processing steps to be carried out during this transmission as a function of the overall probative value that said processing steps together are able to achieve.

8. A system for managing secured electronic correspondences comprising at least one application server providing at least one directory service for the users of said system, a service of supplying said users with current correspondence accounts, a scheduling service and a service for end-to-end monitoring of all the operations scheduled by the application server, said system further comprising a network for transmitting said correspondences and being configured to implement a method as claimed in any one of claims 1 to 7.

9. The system for managing electronic correspondences as claimed in claim 8, **characterised in that** the probative value scores of a determined list of operations carried out by the application server and comprising at least one operation not using the directory service are aggregated in a probative value score for each correspondence.
